# EUROPÄISCHE PATENTSCHRIFT

(11) **EP 3 975 788 B1**
(45) Veröffentlichungstag und Bekanntmachung des Hinweises auf die Patenterteilung: **23.04.2025**
(21) Anmeldenummer: 19727646.2
(22) Anmeldetag: 28.05.2019
(51) Int. Cl.: A43D 999/00, B33Y 10/00, A43B 13/02, A43B 3/00, A43B 13/12, A43B 7/28, A43B 13/18, B33Y 80/00, A43B 13/10

(54) **VERFAHREN ZUR FERTIGUNG EINES KOMBINIERTEN SOHLEN-EINLAGEN-BAUTEILS FÜR EINEN SCHUH**
METHOD FOR PRODUCING A COMBINATION SOLE-INSOLE COMPONENT FOR A SHOE
PROCÉDÉ DE FABRICATION D'UN ÉLÉMENT DE SEMELLE ET DE SEMELLE INTÉRIEURE COMBINÉ POUR CHAUSSURE

(43) Veröffentlichungstag der Anmeldung: 06.04.2022
(73) Patentinhaber: CO12 GmbH, 96215 Lichtenfels (DE)
(72) Erfinder: KRAUS, Christoph, 96215 Lichtenfels (DE); HOFMANN, Oliver, 96215 Lichtenfels (DE)
(74) Vertreter: Hafner & Kohl PartmbB
(86) Internationale Anmeldenummer: PCT/EP2019/063842
(87) Internationale Veröffentlichungsnummer: WO 2020/239206

(56) Entgegenhaltungen:
- EP-A1- 3 165 109
- DE-A1- 102015 212 099
- US-A1- 2014 182 170

## Beschreibung

Die Erfindung betrifft ein Verfahren zur additiven Fertigung eines kombinierten Sohlen-Einlagen-Bauteils für einen orthopädischen Schuh, welches ein Sohlenelement und ein einstückig mit diesem ausgebildetes Einlagenelement umfasst.

Zur Fertigung von Schuhbestandteilen bzw. Schuhen sind aus dem Stand der Technik unterschiedliche fertigungstechnische Ansätze bekannt.

Entsprechende Ansätze sehen bis dato das Fertigen einzelner Schuhbestandteile sowie das Verbinden dieser unter Ausbildung des jeweils zu fertigenden Schuhs in gesonderten Arbeits- bzw. Fertigungsprozessschritten vor. Jeweilige Schuhbestandteile eines zu fertigenden Schuhs, d. h. insbesondere Einlegesohlen- und Sohlenelemente, werden bis dato im Rahmen der Fertigung des Schuhs sonach typischerweise in wenigstens einem ersten Arbeits- bzw. Fertigungsprozessschritt getrennt voneinander gefertigt und in wenigstens einem separaten weiteren Arbeits- bzw. bzw. Fertigungsprozessschritt miteinander verbunden. US 2014/182170 A1 offenbart Verfahren zur Herstellung von individualisierten Sohlen.

Dieser Ansatz ist im Hinblick auf eine möglichst effiziente Fertigung eines Schuhs verbesserungswürdig, sodass hier ein Weiterentwicklungsbedarf besteht. Dies gilt insbesondere auch vor dem Hintergrund einer möglichst individualisierbar konfigurierbaren bzw. individualisiert konfigurierten Fertigung eines Schuhs.

Insbesondere wäre ein Prinzip einer effizienten Fertigung eines kombinierten Sohlen-Einlagen-Bauteils, welches ein Sohlenelement und ein einstückig mit diesem ausgebildetes Einlagenelement umfasst, wünschenswert, dessen Eigenschaften sich möglichst individualisierbar bzw. individualisiert konfigurieren lassen.

Der Erfindung liegt die Aufgabe zugrunde, ein verbessertes Verfahren zur Fertigung eines Sohlen-Einlagen-Bauteils für einen orthopädischen Schuh bzw. eines Schuhs anzugeben.

Die Aufgabe wird durch ein Verfahren zur additiven Fertigung eines kombinierten Sohlen-Einlagen-Bauteils für einen orthopädischen Schuh gemäß Anspruch 1 und ein Verfahren zur Herstellung eines orthopädischen Schuhs gemäß Anspruch 7 gelöst. Die hierzu jeweils abhängigen Ansprüche betreffen mögliche Ausführungsformen der jeweiligen Verfahren. Ansprüche 6 und 10 beziehen sich auf Produkte, die gemäß den Verfahren 1 und 7 gefertigt werden.

Ein erster Aspekt der hierin beschriebenen Erfindung betrifft ein Verfahren zur additiven Fertigung eines kombinierten Sohlen-Einlagen-Bauteils für einen orthopädischen Schuh. Das verfahrensgemäß fertigbare bzw. gefertigte kombinierte Sohlen-Einlagen-Bauteil (im Weiteren kurz als "Sohlen-Einlagen-Bauteil" bezeichnet) bildet einen Bestandteil eines Schuhs; das Sohlen-Einlagen-Bauteil kann sonach als Schuhbestandteil bezeichnet bzw. erachtet werden. Wie sich im Weiteren ergibt, kann das Sohlen-Einlagen-Bauteil im Zusammenhang mit der Fertigung eines Schuhs mit wenigstens einem weiteren Schuhbestandteil, insbesondere einem Schuhaufbauelement, insbesondere eines einen Bestandteil eines Schafts eines Schuhs bildenden Schaftelements, verbunden werden. Zur Fertigung eines Schuhs ist das Sohlen-Einlagen-Bauteil - wie im Zusammenhang mit einem weiteren Aspekt der hierin beschriebenen Erfindung weiter unten erläutert - sonach mit wenigstens einem weiteren Schuhbestandteil zu verbinden.

Das Sohlen-Einlagen-Bauteil umfasst wenigstens ein Einlagenelement und wenigstens ein einstückig mit diesem ausgebildetes Sohlenelement. Das Sohlenelement kann auch als Sohlenabschnitt des Sohlen-Einlagen-Bauteils, das Einlagenelement auch als Einlagenabschnitt des Sohlen-Einlagen-Bauteils bezeichnet bzw. erachtet werden. Das Sohlen-Einlagen-Bauteil übernimmt sonach zwei unterschiedliche Funktionalitäten, nämlich einerseits die Funktionalität eines Sohlenelements und andererseits die Funktionalität eines Einlagenelements. Das Sohlen-Einlagen-Bauteil kann sonach im Allgemeinen als integriertes Bauteil erachtet bzw. bezeichnet werden.

Bei dem Sohlenelement des Sohlen-Einlagen-Bauteils handelt es sich, insbesondere bezogen auf einen Aufbau eines Schuhs, dessen Bestandteil das Sohlen-Einlagen-Bauteil bildet, um ein Mittelsohlenelement oder um ein Außensohlenelement (Laufsohlenelement). In der Ausführung als Mittelsohlenelement weist das Sohlenelement keine im getragenen Zustand eines mit dem Sohlen-Einlagen-Bauteil ausgestatteten Schuhs mit einem Untergrund in Kontakt stehende Außen- bzw. Lauffläche auf, in der Ausführung als Außensohlenelement weist das Sohlenelement eine im getragenen Zustand eines mit dem Sohlen-Einlagen-Bauteil ausgestatteten Schuhs mit einem Untergrund in Kontakt stehende, gegebenenfalls profilierte, Außen- bzw. Lauffläche auf.

Bei dem Einlagenelement des Sohlen-Einlagen-Bauteils handelt es sich, insbesondere bezogen auf einen Aufbau eines Schuhs, dessen Bestandteil das Sohlen-Einlagen-Bauteil bildet, um ein Innensohlenelement. Im getragenen Zustand eines mit dem Sohlen-Einlagen-Bauteil ausgestatteten Schuhs, bildet das Einlagenelement sonach die Auflagefläche für einen Fuß eines Trägers bzw. einer Trägerin. Dies gilt auch für die denkbare Ausführungsform, in welcher das Einlagenelement in einem bezogen auf den Aufbau eines mit dem Sohlen-Einlagen-Bauteil ausgestatteten Schuhs einem Fuß eines Trägers bzw. einer Trägerin zugewandten Auflageflächenbereich zumindest abschnittsweise, gegebenenfalls vollständig, mit einer Funktionslage aus einem Funktionsmaterial, wie z. B. einem Ledermaterial, einem Textilmaterial, etc., versehen ist. Im Zusammenhang mit dem Einlagenelement ist sonach zu erwähnen, dass dieses typischerweise einen geschlossenen Auflageflächenbereich für einen Fuß eines Trägers bzw. einer Trägerin aufweist.

Das Sohlenelement und/oder das Einlagenelement können unabhängig voneinander als eine eine oder mehrere Öffnungen aufweisende offene Struktur oder als eine keine Öffnungen aufweisende geschlossene Struktur ausgebildet werden.

Das Sohlen-Einlagen-Bauteil wird verfahrensgemäß additiv, d. h. unter Anwendung bzw. Einsatz wenigstens eines additiven Fertigungsprozesses, gefertigt. Es kommen dabei grundsätzlich sämtliche additiven Fertigungsprozesse in Betracht. Beispielsweise kommen additive Fertigungsprozesse in Betracht, welche eine additive Verarbeitung von pulverförmigem Baumaterial oder von nicht-pulverförmigem, d. h. insbesondere strangförmigem, Baumaterial ermöglichen. Weiter beispielsweise kommen additive Fertigungsprozesse in Betracht, welche eine strahlungsbasierte additive Fertigung, d. h. eine additive Fertigung, welche eine selektive Verfestigung von Baumaterial unter Einwirkung von energetischer Strahlung (Strahlungsenergie), oder eine nicht-strahlungsbasierte additive Fertigung, d. h. eine additive Fertigung, welche eine selektive Verfestigung von Baumaterial ohne Einwirkung von energetischer Strahlung (Strahlungsenergie), ermöglichen.

Da das Sohlen-Einlagen-Bauteil typischerweise, jedoch keinesfalls zwingend, zumindest abschnittsweise, insbesondere vollständig, aus einem Kunststoffmaterial (der Begriff "Kunststoffmaterial" umfasst auch Gemische chemisch und/oder physikalisch unterschiedlicher Kunststoffe) gefertigt wird - das Einlagenelement und das Sohlenelement werden typischerweise aus dem gleichen Material gebildet - kommen insbesondere solche additiven Fertigungsprozesse in Betracht, welche eine additive Verarbeitung von Kunststoffmaterialien ermöglichen. Lediglich beispielhaft sei in diesem Zusammenhang auf Stereolithographie-Prozesse, Binder-Jetting-Prozesse, Fused-Deposition-Modelling ("FDM")-Prozesse oder Continuous-Liquid-Interface-Production ("CLIP")-Prozesse verwiesen. Das Sohlen-Einlagen-Bauteil kann sonach z. B. vermittels eines Stereolithographie-Prozesses, Binder-Jetting-Prozesses, Fused-Deposition-Modelling ("FDM")-Prozesses oder einem Continuous-Liquid-Interface-Production ("CLIP")-Prozesses gefertigt werden. Zur Durchführung des im Weiteren näher erläuterten zweiten Schritts des Verfahrens können sonach beispielsweise additive Fertigungseinrichtungen, welche zur Durchführung von Stereolithographie-Prozessen, Binder-Jetting-Prozessen, FDM-Prozessen oder CLIP-Prozessen eingerichtet sind, eingesetzt werden.

Sollte das Sohlen-Einlagen-Bauteil zumindest abschnittsweise, insbesondere vollständig, aus einem anderen Material als einem Kunststoffmaterial, d. h. z. B. einem Metall, gefertigt werden, kommen entsprechend solche additiven Fertigungsprozesse in Betracht, welche eine additive Verarbeitung von wenigstens einem anderen Material als einem Kunststoffmaterial ermöglichen, in Betracht. Lediglich beispielhaft sei auf selektive Lasersinterverfahren, selektive Laserschmelzverfahren, Metal-Binder-Jetting-Verfahren, etc. verwiesen.

Das Verfahren umfasst konkret die folgenden Schritte:
In einem ersten Schritt des Verfahrens erfolgt ein Bereitstellen von Einlagenelementdaten und Sohlenelementdaten. Das Bereitstellen kann z. B. über einen Datenträger oder eine Datenverbindung, wie ein lokales oder globales Datennetzwerk, d. h. z. B. ein Intranet oder das Internet, erfolgen. Die Bereitstellung der Einlagenelementdaten und Sohlenelementdaten erfolgt typischerweise an eine additive Fertigungseinrichtung bzw. eine dieser zugehörige, hardware- und/oder softwaremäßig implementierte Steuereinrichtung, welche zur datenmäßigen Verarbeitung der ihr bereitgestellten Einlagenelementdaten und Sohlenelementdaten zur Vorbereitung und/oder Durchführung eines additiven Fertigungsprozesses eingerichtet ist.

Die bereitgestellten Einlagenelementdaten beschreiben die geometrisch-konstruktive Gestaltung eines Einlagenelements, welches, wie erwähnt, einen Bestandteil des zu fertigenden Sohlen-Einlagen-Bauteils bildet. In den Einlagenelementdaten sind typischerweise sämtliche geometrisch-konstruktiven Parameter des Einlagenelements des zu fertigenden Sohlen-Einlagen-Bauteils enthalten. Die Einlagenelementdaten können auch als Baudaten des Einlagenelements bezeichnet bzw. erachtet respektive verwendet werden. Die Einlagenelementdaten können in einem beliebigen Dateiformat bereitgestellt werden; lediglich beispielhaft wird auf STL-, COLLADA-, OBJ-, FBX-, X3D-Formate verwiesen.

Die Einlagenelementdaten werden bzw. wurden Grundlage von die Morphologie wenigstens eines Fußes eines Trägers bzw. einer Trägerin zumindest abschnittsweise, gegebenenfalls vollständig, beschreibenden Fußdaten erzeugt. Die Einlagenelementdaten beschreiben sonach die Morphologie des wenigstens einen durch die Fußdaten beschriebenen Fußes bzw. eine zumindest abschnittsweise, gegebenenfalls vollständig, an die Morphologie des wenigstens einen durch die Fußdaten beschriebenen Fußes angepasste geometrisch-konstruktive Gestaltung des Einlagenelements. Das Einlagenelement kann verfahrensgemäß sonach auf Grundlage entsprechender Einlagenelementdaten zumindest abschnittsweise, gegebenenfalls vollständig, mit einer im Hinblick auf einen Fuß eines Trägers individuell konfiguriert ausgebildeten geometrisch-konstruktiven Gestaltung ausgebildet werden. Die Berücksichtigung entsprechender Fußdaten - diese können z. B. auf Grundlage von optischen Aufnahmen (Scans) des Fußes, Abdrücken des Fußes, etc. - erstellt werden, bei der Erzeugung der Einlagenelementdaten stellt die Grundlage für eine (hoch)individualisierbare bzw. (hoch)individualisierte Fertigung der Sohlen-Einlagen-Bauteil dar.

Die bereitgestellten Sohlenelementdaten beschreiben die geometrisch-konstruktive Gestaltung eines Sohlenelements, welches, wie erwähnt, einen Bestandteil des zu fertigenden Sohlen-Einlagen-Bauteils bildet. In den Sohlenelementdaten sind typischerweise sämtliche geometrisch-konstruktiven Parameter des Sohlenelements des zu fertigenden Sohlen-Einlagen-Bauteils enthalten. Die Sohlenelementdaten können auch als Baudaten des Sohlenelements bezeichnet bzw. erachtet respektive verwendet werden. Die Sohlenelementdaten können ebenso in einem beliebigen Dateiformat bereitgestellt werden; lediglich beispielhaft wird auf STL-, COLLADA-, OBJ-, FBX-, X3D-Formate verwiesen.

Selbstverständlich ist es möglich, dass die Einlagenelementdaten und die Sohlenelementdaten als gemeinsamer Datensatz bereitgestellt werden, welcher sowohl die Einlagenelementdaten als auch die Sohlenelementdaten enthält. In einem entsprechenden gemeinsamen Datensatz sind sonach typischerweise sämtliche geometrisch-konstruktiven Parameter des Sohlen-Einlagen-Bauteils enthalten.

In einem zweiten Schritt des Verfahrens erfolgt ein additives Fertigen eines Sohlen-Einlagen-Bauteils auf Grundlage der Einlagenelementdaten und der Sohlenelementdaten bzw. eines entsprechenden gemeinsamen Datensatzes. In dem zweiten Schritt des Verfahrens erfolgt sonach die eigentliche Fertigung des Sohlen-Einlagen-Bauteils durch Anwenden wenigstens eines additiven Fertigungsprozesses zur Fertigung des Sohlen-Einlagen-Bauteils. Dabei ist wesentlich, dass das Sohlen-Einlagen-Bauteil in fertigungstechnisch effizienter Weise in einem einzigen additiven Fertigungsprozess gefertigt wird, was in der einstückigen bzw. integralen bzw. monolithischen Konfiguration des Sohlen-Einlagen-Bauteils resultiert; das Einlagenelement und das Sohlenelement werden sonach in einem einzigen additiven Fertigungsprozess gemeinsam unter Ausbildung des Sohlen-Einlagen-Bauteils gefertigt; hieraus resultiert die einstückige Ausbildung des Sohlen-Einlagen-Bauteils, welche sich dadurch auszeichnet, dass das Einlagenelement mit dem Sohlenelement und umgekehrt unlösbar verbunden ist. Der zur Fertigung des Sohlen-Einlagen-Bauteils angewendete additive Fertigungsprozess beinhaltet sonach ein additives Ausbilden des Einlagenelements und des Sohlenelements, welche im Rahmen des additiven Fertigungsprozesses als ein kombiniertes Bauteil gefertigt und somit (beschädigungs- bzw. zerstörungsfrei) unlösbar stoffschlüssig miteinander verbunden gefertigt werden. Das Einlagenelement und das Sohlenelement schließen sonach unmittelbar aneinander an bzw. gehen unmittelbar ineinander über. Das Einlagenelement kann sonach für eine beispielhafte Anordnung bzw. Ausrichtung des Sohlen-Einlagen-Bauteils in einem Bauraum einer additiven Fertigungseinrichtung unmittelbar auf dem Sohlenelement aufgebaut werden oder umgekehrt. Je nach Anordnung bzw. Ausrichtung des Sohlen-Einlagen-Bauteils in einem Bauraum einer additiven Fertigungseinrichtung sind jedoch auch andere Baustrategien, in welchen Abschnitte des Einlagenelements und des Sohlenelements (schichtbezogen) beispielsweise gleichzeitig aufgebaut werden, denkbar.

Insgesamt liegt ein hocheffizientes Verfahren zur Fertigung eines Sohlen-Einlagen-Bauteils vor, welches gleichermaßen eine fußspezifisch individualisierbare bzw. individualisierte Konfiguration eines Einlagenelements ermöglicht.

Es werden Einlageelementdaten bereitgestellt, welche eine geometrisch-konstruktive Gestaltung des Einlagenelements beschreiben, welche zumindest abschnittsweise, insbesondere vollständig, durch eine im Hinblick auf die durch die Fußdaten beschriebene Morphologie des wenigstens einen Fußes gewählte ergonomische Formgebung ausgebildet wird. Das Einlagenelement kann sonach z. B. zumindest abschnittsweise, gegebenenfalls vollständig, mit einem im Hinblick auf die durch die Fußdaten beschriebene Fußmorphologie individuell konfigurierten Fußbett ausgebildet werden, was die Trageeigenschaften des Sohlen-Einlagen-Bauteils verbessern kann.

Es werden Sohlenelementdaten bereitgestellt, welche eine geometrisch-konstruktive Gestaltung des Sohlenelements beschreiben, welche zumindest abschnittsweise, insbesondere vollständig, durch eine mehrere miteinander verbundene strebenartige bzw. -förmige Strukturelemente umfassende Strukturelementanordnung gebildet ist. Das Sohlenelement wird sonach in Form einer durch die Sohlenelementdaten beschriebenen Strukturelementanordnung gefertigt, welche zumindest abschnittsweise, insbesondere vollständig, durch mehrere miteinander verbundene strebenartige bzw. -förmige Strukturelemente umfasst. Die strebenartigen bzw. -förmigen Strukturelemente werden im Folgenden abgekürzt als "Strukturelemente" bezeichnet. Wie weiter unten näher erläutert wird, können durch unterschiedliche Konfigurationen einer entsprechenden Strukturelementanordnung gezielt unterschiedliche strukturelle, d. h. insbesondere mechanische, Eigenschaften des Sohlenelements und somit des Sohlen-Einlagen-Bauteils realisiert werden, was die Trageeigenschaften des Sohlen-Einlagen-Bauteils verbessern kann.

Das Einlagenelement kann mit einem randseitig zumindest abschnittsweise, gegebenenfalls vollständig, umlaufenden, insbesondere gegenüber einer Referenzebene - dies kann z. B. durch einen Auflageflächenbereich des Einlagenelements definiert werden - erhöhten, Einlagensohlenelementbereich gefertigt werden, welcher den Fuß eines Trägers bzw. einer Trägerin im getragenen Zustand des Sohlen-Einlagen-Bauteils (fuß)umfangsseitig zumindest abschnittsweise umschließt. Auch derart können die Trageeigenschaften des Sohlen-Einlagen-Bauteils verbessert werden.

Das Sohlenelement und/oder das Einlagenelement kann bzw. können zumindest abschnittsweise, gegebenenfalls vollständig, mit mehreren Zonen unterschiedlicher geometrisch-konstruktiver und/oder unterschiedlicher struktureller Eigenschaften, d. h. insbesondere mechanischer Eigenschaften, gefertigt werden. Beispielsweise kann wenigstens eine Zone für einen Vorfußbereich, wenigstens eine Zone für einen Mittelfußbereich sowie wenigstens eine Zone für einen Rückfußbereich (Fersenbereich) ausgebildet werden, welche sich in ihren strukturellen Eigenschaften, d. h. insbesondere in ihren mechanischen Eigenschaften, unterscheiden können. Derart ist eine hochindividuelle Konfiguration des Sohlen-Einlagen-Bauteils realisiert, wodurch die Trageeigenschaften des Sohlen-Einlagen-Bauteils verbessert werden können. Entsprechende Zonen können insbesondere trägerspezifisch individualisiert ausgebildet werden, sodass diese für einen Träger bzw. eine Trägerin, welche(r) z. B. eine erhöhte Dämpfung in einem Mittelfußbereich wünscht, zumindest in den den Mittelfußbereich betreffenden Zonen mit anderen strukturellen Eigenschaften, d. h. z. B. einer erhöhten Dämpfung, ausgebildet werden als für einen Träger bzw. eine Trägerin, welche(r) z. B. eine erhöhte Dämpfung in einem Rückfußbereich wünscht.

Es wurde erwähnt, dass Sohlenelementdaten bereitgestellt werden können, welche eine geometrisch-konstruktive Gestaltung des Sohlenelements beschreiben, welche zumindest abschnittsweise, insbesondere vollständig, durch eine mehrere miteinander verbundene strebenartige bzw. -förmige Strukturelemente umfassenden Strukturelementanordnung gebildet ist. Die strukturellen Eigenschaften des Sohlenelements, d. h. insbesondere die die Dämpfungseigenschaften bzw. den Härte- bzw. Verformungsgrad definierenden mechanischen Eigenschaften des Sohlenelements, resultieren sonach im Wesentlichen aus dem geometrisch-konstruktiven Aufbau der Strukturelementanordnung, d. h. insbesondere der Anzahl und/oder Anordnung und/oder Ausrichtung jeweiliger Strukturelemente. Entsprechend lassen sich die strukturellen Eigenschaften des Sohlenelements, d. h. insbesondere die die Dämpfungseigenschaften bzw. den Härte- bzw. Verformungsgrad definierenden mechanischen Eigenschaften des Sohlenelements, durch die gezielte Auswahl bzw. Variation der Anzahl und/oder Anordnung und/oder Ausrichtung jeweiliger Strukturelemente gezielt einstellen. Insbesondere ist durch eine gezielte bereichs- bzw. zonenweise Auswahl bzw. eine gezielte bereichs- bzw. zonenweise Variation der Anordnung und/oder Ausrichtung jeweiliger Strukturelemente eine beliebige Anzahl an Bereichen bzw. Zonen, d. h. z. B. einzelne oder mehrere Bereiche bzw. Zonen für einen Vorfußbereich, einzelne oder mehrere Bereiche bzw. Zonen für einen Mittelfußbereich sowie einzelne oder mehrere Bereiche bzw. Zonen für einen Rückfußbereich (Fersenbereich), mit unterschiedlichen strukturellen Eigenschaften, d. h. insbesondere unterschiedlichen mechanischen Eigenschaften, realisierbar. Mithin sind Sohlen-Einlagen-Bauteile mit für einen Träger, d. h. insbesondere auch für einen bestimmten Fuß eines Trägers, individuell anpassbaren bzw. angepassten strukturellen Eigenschaften, d. h. insbesondere mechanischen Eigenschaften, realisierbar.

Die strebenartige bzw. -förmige geometrisch-konstruktive Grundform der Strukturelemente ergibt sich typischerweise aus einer länglichen Grundform der Strukturelemente. Die längliche Grundform eines jeweiligen Strukturelements kann durch eine zumindest abschnittsweise, gegebenenfalls vollständig, geradlinig verlaufende Erstreckung des jeweiligen Strukturelements und/oder durch eine zumindest abschnittsweise, gegebenenfalls vollständig, gebogen verlaufende Erstreckung des jeweiligen Strukturelements ausgebildet sein bzw. werden.

Im Hinblick auf die Querschnittsgeometrie jeweiliger Strukturelemente sind verschiedene Konfigurationen möglich. Ein Strukturelement kann z. B. mit einer vieleckigen, d. h. insbesondere viereckigen, Querschnittsgeometrie ausgebildet werden; prinzipiell sind jedoch auch andere, d. h. z. B. runde bzw. rundliche, Querschnittsgeometrien denkbar. Selbstverständlich können unterschiedliche Strukturelemente mit unterschiedlichen Querschnittsgeometrien ausgebildet werden; unterschiedliche Strukturelemente können sonach unterschiedliche Querschnittsgeometrien aufweisen. Ebenso ist es denkbar, dass ein (einziges) Strukturelement mit unterschiedlichen Querschnittsgeometrien ausgebildet wird; ein (einziges) Strukturelement kann sonach mit Abschnitten unterschiedlicher Querschnittsgeometrie ausgebildet werden.

Wie sich im Weiteren ergibt, können sich unterschiedliche Strukturelemente in ihren geometrisch-konstruktiven Eigenschaften, d. h. z. B. ihren geometrischen Abmessungen, d. h. insbesondere Länge, Breite, Dicke (Höhe), unterscheiden, sodass aufgrund unterschiedlicher geometrischer Abmessungen unterschiedliche Strukturelemente unterschiedliche strukturelle Eigenschaften, d. h. insbesondere unterschiedliche mechanische Eigenschaften, aufweisen.

Wie sich aus vorstehenden Ausführungen ergibt, kann eine entsprechende Strukturelementanordnung mit gleichen oder unterschiedlichen Strukturelementen in gleichen oder unterschiedlichen Anordnungen und/oder Ausrichtungen ausgebildet werden.

Eine entsprechende Strukturelementanordnung kann sonach beispielsweise mit ersten und zweiten Strukturelementen ausgebildet werden. Die ersten Strukturelemente können in einer ersten Raumrichtung bzw. Raumorientierung angeordnet oder ausgebildet werden, die zweiten Strukturelemente können in einer von der ersten Raumrichtung bzw. Raumorientierung verschiedenen zweiten Raumrichtung bzw. Raumorientierung angeordnet oder ausgebildet werden. Die erste Raumrichtung bzw. Raumorientierung kann z. B. eine durch eine vertikale Raumachse definierte vertikale Raumrichtung bzw. Raumorientierung sein, die zweite Raumrichtung bzw. Raumorientierung kann eine durch eine horizontale Raumachse definierte horizontale Raumrichtung bzw. Raumorientierung sein. Die ersten Strukturelemente können sonach winklig, d. h. beispielsweise rechtwinklig, zu den zweiten Strukturelementen (und umgekehrt) angeordnet bzw. ausgerichtet sein und umgekehrt.

Selbstverständlich kann eine entsprechende Strukturelementanordnung zusätzlich zu entsprechenden ersten und zweiten Strukturelementen mit weiteren Strukturelementen ausgebildet werden, welche in wenigstens einer von der ersten und zweiten Raumrichtung bzw. Raumorientierung verschiedenen weiteren Raumrichtung bzw. Raumorientierung, d. h. z. B. in einer bezüglich einer vertikalen und/oder horizontalen Raumrichtung bzw. Raumorientierung schräg verlaufenden Raumrichtung bzw. Raumorientierung, angeordnet oder ausgebildet sind. Wie sich im Weiteren ergibt, können jedoch auch erste und/oder zweite Strukturelemente in einer bezüglich einer vertikalen und/oder horizontalen Raumrichtung bzw. Raumorientierung schräg verlaufenden Raumrichtung bzw. Raumorientierung, angeordnet oder ausgebildet sein.

Entsprechende erste und zweite Strukturelemente können, insbesondere aufgrund ihrer unterschiedlichen Anordnung und Ausrichtung, unterschiedlich funktionalisiert, d. h. mit unterschiedlichen Funktionen, ausgebildet werden. Die ersten Strukturelemente können z. B. als zur Übertragung von bei bestimmungsgemäßer Verwendung auf das Sohlen-Einlagen-Bauteil wirkenden Kräften, d. h. insbesondere Druckkräften, angeordnet oder ausgebildet werden. Die zweiten Strukturelemente können sonach auch als Kraftübertragungselemente, d. h. insbesondere als Druckkraftübertragungselemente, bezeichnet bzw. erachtet (werden). Die zweiten Strukturelemente können z. B. als zur Dämpfung von bei bestimmungsgemäßer Verwendung auf das Sohlen-Einlagen-Bauteil wirkenden Kräften, d. h. insbesondere Druckkräften, angeordnet oder ausgebildet werden. Die zweiten Strukturelemente können sonach (auch) als Dämpfungselemente bezeichnet bzw. erachtet (werden).

Eine entsprechende Strukturelementanordnung kann, wie angedeutet, zusätzlich mit dritten Strukturelementen ausgebildet werden, welche sich funktionell von den ersten und zweiten Strukturelementen unterscheiden. Entsprechende dritte Strukturelemente können als zur Übertragung von auf das Sohlen-Einlagen-Bauteil, insbesondere in Längsrichtung des Sohlen-Einlagen-Bauteils wirkenden, Zugkräften ausgebildete Zugkraftübertragungselemente und/oder als zur Übertragung von innerhalb des Sohlen-Einlagen-Bauteils entstehenden, insbesondere in Längsrichtung des Sohlen-Einlagen-Bauteils wirkenden, Zugkräften ausgebildete Zugkraftübertragungselemente angeordnet oder ausgebildet. Die dritten Strukturelemente können sonach auch als Zugkraftübertragungselemente bezeichnet bzw. erachtet. Die dritten Strukturelemente können insbesondere zwischen zwei, insbesondere parallel angeordneten oder ausgebildeten, zweiten Strukturelementen ausgebildet werden.

Entsprechende dritte Strukturelemente können in einer dritten Raumrichtung bzw. Raumorientierung angeordnet oder ausgebildet werden. Die dritte Raumrichtung bzw. Raumorientierung kann eine durch eine horizontale Raumachse definierte horizontale Raumrichtung bzw. Raumorientierung sein. Die dritte Raumrichtung bzw. Raumorientierung kann sonach der zweiten Raumrichtung bzw. Raumorientierung der zweiten Strukturelemente entsprechen.

Entsprechende erste Strukturelemente und/oder zweite Strukturelemente können segmentiert ausgeführt ausgebildet werden. Erste und/oder zweite Strukturelemente können sonach mit wenigstens zwei, insbesondere zumindest abschnittsweise parallel verlaufend angeordneten, Strukturelementsegmenten ausgebildet werden. Durch eine segmentiert ausgeführte Ausbildung der Strukturelemente - wobei es denkbar ist, dass nur erste oder nur zweite Strukturelemente oder sowohl erste als auch zweite Strukturelemente segmentiert ausgeführt ausgebildet werden - können die strukturellen Eigenschaften des Sohlen-Einlagen-Bauteils, d. h. insbesondere die mechanischen Eigenschaften des Sohlen-Einlagen-Bauteils, weiter gezielt beeinflusst werden.

Jeweilige Strukturelementsegmente können paarweise angeordnet oder ausgebildet werden. Dies gilt insbesondere für parallel angeordnete oder ausgebildete Strukturelementsegmente. Erste und/oder zweite Strukturelemente können sonach mit mehreren Paaren parallel angeordneter oder ausgebildeter Strukturelementsegmente ausgebildet werden. Wenigstens zwei parallel angeordnete oder ausgebildete Strukturelementsegmente können ein Strukturelementsegmentpaar bilden.

Unabhängig von deren möglicher segmentierter Ausführung können erste Strukturelemente und/oder zweite Strukturelemente schräg bezüglich einer horizontalen oder vertikalen Referenzachse oder -ebene verlaufend ausgebildet werden. Ein entsprechend schräg bezüglich einer horizontalen oder vertikalen Referenzachse oder -ebene ausgebildeter Verlauf jeweiliger Strukturelemente bzw. für den Fall der segmentiert ausgeführten Ausbildung jeweiliger Strukturelementsegmente stellt ebenso eine Maßnahme zur gezielten Beeinflussung der strukturellen Eigenschaften des Sohlen-Einlagen-Bauteils, d. h. insbesondere der mechanischen Eigenschaften des Sohlen-Einlagen-Bauteils, dar, da sich durch den schrägen Verlauf z. B. andere Dämpfungseigenschaften ergeben können. Entsprechend können insbesondere die als Dämpfungselemente angeordneten oder ausgebildeten zweiten Strukturelemente schräg bezüglich einer horizontalen oder vertikalen Referenzachse oder -ebene verlaufend angeordnet ausgebildet werden. Dabei ist es denkbar, dass bezüglich einer Oberseite des Sohlen-Einlagen-Bauteils obere zweite Strukturelemente unter einem anderen Winkel schräg bezüglich einer entsprechenden Referenzachse bzw. -ebene verlaufend angeordnet ausgebildet werden, als bezüglich einer Oberseite des Sohlen-Einlagen-Bauteils untere zweite Strukturelemente.

Auch eine Kombination der segmentierten Ausführung und des schräg bezüglich einer horizontalen oder vertikalen Referenzachse oder -ebene angeordneten Verlaufs jeweiliger Strukturelemente ist denkbar. Mithin können erste Strukturelemente und/oder zweite Strukturelemente durch wenigstens zwei, insbesondere zumindest abschnittsweise parallel verlaufend angeordnete, Strukturelementsegmente gebildet sein oder wenigstens zwei, insbesondere zumindest abschnittsweise parallel verlaufend angeordnete, Strukturelementsegmente umfassen, und die jeweiligen Strukturelementsegmente des jeweiligen ersten Strukturelements und/oder die jeweiligen Strukturelementsegmente des jeweiligen zweiten Strukturelements schräg bezüglich einer horizontalen oder vertikalen Referenzachse oder -ebene verlaufend angeordnet ausgebildet werden.

Für ein durch mehrere entsprechende Strukturelementsegmentpaare gebildetes segmentiert ausgeführtes Strukturelement gilt, dass ein erstes Strukturelementsegmentpaar in einem ersten Winkel bezüglich einer horizontalen oder vertikalen Referenzachse oder -ebene verlaufend ausgebildet werden kann und ein zweites Strukturelementsegmentpaar in einem von dem ersten Winkel verschiedenen zweiten Winkel bezüglich einer horizontalen oder vertikalen Referenzachse oder -ebene verlaufend ausgebildet werden kann.

Durch eine definierte Anordnung und Ausrichtung entsprechender erster und zweiter Strukturelemente kann eine kombinierte Kraftübertragungs-Dämpfungs-Substruktur ausgebildet werden. Die im Folgenden abgekürzt als "Substruktur" bezeichnete kombinierte Kraftübertragungs-Dämpfungs-Substruktur hat sonach aufgrund der, wie erwähnt, als Kraftübertragungselemente dienenden ersten Strukturelemente sowohl Kraftübertragungseigenschaften als auch aufgrund der, wie erwähnt, als Dämpfungselemente dienenden zweiten Strukturelemente Dämpfungseigenschaften inne. Die Substruktur zeichnet sich damit sowohl durch eine Kraftübertragungsfunktion als auch durch eine Dämpfungsfunktion aus.

Die Substruktur kann in einer beispielhaften Ausführungsform z. B. durch zwei erste Strukturelemente, d. h. zwei Kraftübertragungselemente, und zwei zweite Strukturelemente, d. h. zwei Dämpfungselemente, ausgebildet werden. Die beiden Kraftübertragungselemente können in einer Ausrichtung parallel zu der Richtung einer, insbesondere bei bestimmungsgemäßer Verwendung des Sohlen-Einlagen-Bauteils, auf das Sohlen-Einlagen-Bauteil wirkenden Kraft (Kraftwirkrichtung) angeordnet ausgebildet werden. Die beiden Dämpfungselemente können in einer Ausrichtung quer zu der Richtung einer, insbesondere bei bestimmungsgemäßer Verwendung des Sohlen-Einlagen-Bauteils, auf das Sohlen-Einlagen-Bauteil wirkenden Kraft (Kraftwirkrichtung) angeordnet ausgebildet werden.

Die Dämpfungseigenschaften einer jeweiligen Dämpfungselementanordnung ergeben sich insbesondere aus den Abmessungen, d. h. insbesondere der Dicke, der diese bildenden Dämpfungselemente sowie dem Abstand zwischen den diese bildenden Dämpfungselementen. Mithin sind über die geometrischen Abmessungen, d. h. insbesondere die Dicke, der Dämpfungselemente und deren Abstand zueinander Parameter zur gezielten Auswahl und Einstellung bestimmter Dämpfungseigenschaften der Dämpfungselementanordnung gegeben. Durch entsprechende Auswahl und Einstellung der Parameter kann für eine bestimmte auf die Dämpfungselementanordnung wirkende Kraft z. B. eine bestimmte Verformung, d. h. insbesondere eine maximale Verformung, der Dämpfungselementanordnung definiert werden.

Die Einleitung von Kräften in die Dämpfungselementanordnung erfolgt typischerweise über jeweilige Kraftübertragungselemente einer jeweiligen Substruktur. Ein erstes Kraftübertragungselement kann derart relativ zu einem diesen benachbarten ersten Dämpfungselement angeordnet ausgebildet werden, dass über dieses Kräfte in die Dämpfungselementanordnung übertragbar sind. Ein zweites Kraftübertragungselement kann derart relativ zu einem diesen benachbarten zweiten Dämpfungselement angeordnet ausgebildet werden, dass über dieses Kräfte aus der Dämpfungselementanordnung auf dieses übertragbar sind.

Die beiden Dämpfungselemente einer Substruktur können dabei unter Ausbildung einer Dämpfungselementanordnung parallel zu einander ausgebildet werden. Durch Vorsehen unterschiedlicher Dämpfungselementanordnungen können zonenweise lokal unterschiedliche Dämpfungseigenschaften ausgebildet werden.

Aufgrund der, wie erwähnt, typischerweise vertikalen Ausrichtung der Kraftübertragungselemente und der, wie erwähnt, typischerweise horizontalen Ausrichtung der Dämpfungselemente kann sich für eine Substruktur sonach ein Doppel-T-Aufbau ergeben, bei welchem die durch die Dämpfungselemente gebildeten horizontal verlaufenden Abschnitte der "Ts" aufeinander liegend angeordnet ausgebildet werden und die durch die Kraftübertragungselemente gebildeten vertikal verlaufenden Abschnitte der "Ts" in vertikaler Richtung miteinander fluchtend angeordnet ausgebildet werden.

Eine entsprechende Strukturelementanordnung kann mit einer Vielzahl an entsprechenden Substrukturen ausgebildet werden, wobei mehrere Substrukturen eine Substrukturanordnung bilden können. Die Substrukturen werden typischerweise in einer (gemeinsamen) Ebene des Sohlen-Einlagen-Bauteils angeordnet ausgebildet.

Das Sohlenelement kann zusätzlich zu den Strukturelementen mit mehreren zum Einleiten einer bei bestimmungsgemäßer Verwendung auf das Sohlen-Einlagen-Bauteil wirkenden Kraft in wenigstens eine jeweilige Substruktur ausgebildeten flächigen, insbesondere plättchenartigen bzw. -förmigen, Krafteinleitungselementen ausgebildet werden. Jeweilige im Weiteren abgekürzt als "Krafteinleitungselemente" bezeichnete flächige Krafteinleitungselemente können eine vieleckige, d. h. insbesondere eine viereckige, Grundform aufweisen. Jeweilige Krafteinleitungselemente können auf einer Ober- und/oder einer Unterseite einer Strukturelementanordnung angeordnet oder ausgebildet sein. Mithin können erste Krafteinleitungselemente auf einer Oberseite der Strukturelementanordnung ausgebildet werden, und zweite Krafteinleitungselemente auf einer Unterseite der Strukturelementanordnung ausgebildet werden. Jeweilige auf einer Ober- bzw. einer Unterseite einer Strukturelementanordnung angeordnete oder ausgebildete Krafteinleitungselemente werden typischerweise nicht unmittelbar mit- bzw. untereinander verbunden. Zwischen auf einer Ober- bzw. einer Unterseite einer Strukturelementanordnung unmittelbar benachbart angeordneten oder ausgebildeten Krafteinleitungselementen kann daher ein Spaltraum ausgebildet werden. Die Einleitung einer Kraft in ein erstes Krafteinleitungselement bedingt damit nicht unmittelbar die Einleitung einer Kraft in ein zu dem ersten Krafteinleitungselement unmittelbar benachbart ausgebildetes zweites Krafteinleitungselement.

Die Krafteinleitungselemente können zum Einleiten einer auf die Sohle wirkenden Kraft in die Kraftübertragungselemente (ersten Strukturelemente) einer jeweiligen Substruktur ausgebildet und entsprechend mit wenigstens einem Kraftübertragungselement verbunden werden; an jeweiligen Krafteinleitungselementen wird sonach typischerweise wenigstens ein erstes Strukturelement angebunden. Das jeweilige erste Strukturelement ragt typischerweise in vertikaler Richtung von einer der Strukturelementanordnung zugewandten Ober- oder Unterseite eines jeweiligen Krafteinleitungselements in Richtung der Dämpfungselemente ab.

Durch entsprechende Krafteinleitungselemente und entsprechende Substrukturen kann eine Einheitszelle des Sohlenelements ausgebildet werden. Eine Einheitszelle kann als geometrisch-konstruktiver Grundbaustein des Sohlenelements bezeichnet bzw. erachtet werden. Eine Einheitszelle ist typischerweise durch eine Mehrzahl an in einer (gemeinsamen) Ebene der Sohle und um einen bestimmten Winkel, d. h. beispielsweise einen Winkel von 90°, relativ zueinander verdreht bzw. versetzt zueinander angeordnete und ausgerichtete Substrukturen sowie eine Mehrzahl an auf diesen Substrukturen ober- und unterseitig angeordneten oder ausgebildeten Krafteinleitungselementen gebildet. Die Substrukturen einer Einheitszelle können, insbesondere im Bereich ihrer Enden, über, insbesondere blockartige, Verbindungsbereiche miteinander verbunden sein. Die Krafteinleitungselemente bilden typischerweise die Ober- und Unterseite einer jeweiligen Einheitszelle. Die Substrukturen bilden typischerweise die Seiten einer jeweiligen Einheitszelle.

Eine jeweilige Einheitszelle kann, je nach den konkreten Abmessungen der einzelnen Bestandteile der Einheitszelle z. B. mit einer quaderartigen bzw. -förmigen Grundform, d. h. insbesondere mit einer würfelartigen bzw. -förmigen Grundform, ausgebildet werden. Die Kanten- bzw. Seitenlänge einer entsprechend quaderartigen bzw. -förmigen Einheitszelle kann z. B. in einem Bereich zwischen 5 und 15 mm, insbesondere zwischen bei ca. 10 mm, liegen. Die Höhe einer entsprechend quaderartigen bzw. -förmigen Einheitszelle kann ebenso z. B. in einem Bereich zwischen 5 und 15 mm, insbesondere zwischen bei ca. 10 mm, liegen. Größer oder kleiner abgemessene Einheitszellen sind denkbar.

Eine konkrete Ausführungsform einer entsprechenden Einheitszelle kann vier in einer Ebene um 90° verdreht bzw. versetzt zueinander angeordnete und ausgerichtete Substrukturen umfassen, welche eine Substrukturanordnung bilden. Auf dieser Substrukturanordnung wird oberseitig ein erstes Krafteinleitungselement und unterseitig ein zweites Krafteinleitungselement ausgebildet. Die Einheitszelle umfasst sonach vier Substrukturen und zwei Krafteinleitungselemente. Die Substrukturen bilden die Seitenflächen der Einheitszelle, das erste Krafteinleitungselement bildet die Oberseite, das zweite Krafteinleitungselement bildet die Unterseite der Einheitszelle. Die Einheitszelle weist eine quaderartige bzw. -förmige Grundform, d. h. insbesondere eine würfelartige bzw. -förmige Grundform, auf.

Die strukturellen Eigenschaften, d. h. insbesondere die mechanischen Eigenschaften, einer jeweiligen Einheitszelle werden durch die strukturellen Eigenschaften, d. h. insbesondere die mechanischen Eigenschaften, der Bestandteile der Einheitszelle sowie deren Anordnung und Ausrichtung relativ zu einander definiert.

Das Sohlenelement kann mit einer Vielzahl an im Hinblick auf deren geometrisch-konstruktive Eigenschaften, d. h. insbesondere deren Abmessungen, und/oder deren strukturelle Eigenschaften, d. h. insbesondere deren mechanische Eigenschaften, gleiche oder unterschiedliche Einheitszellen ausgebildet werden. Jeweilige Einheitszellen können sonach gleiche geometrisch-konstruktive Eigenschaften und gleiche strukturelle Eigenschaften aufweisen. Denkbar ist es jedoch auch, dass jeweilige Einheitszellen gleiche geometrisch-konstruktive Eigenschaften und unterschiedliche strukturelle Eigenschaften aufweisen. Analoges gilt für Einheitszellen unterschiedlicher geometrisch-konstruktive Eigenschaften, d. h., dass die Einheitszellen unterschiedliche geometrisch-konstruktive Eigenschaften und gleiche strukturelle Eigenschaften aufweisen oder unterschiedliche geometrisch-konstruktive Eigenschaften und unterschiedliche strukturelle Eigenschaften aufweisen.

Unmittelbar benachbart angeordnete Einheitszellen können über wenigstens einen Verbindungsbereich miteinander verbunden werden. Ein entsprechender Verbindungsbereich kann z. B. im Bereich jeweiliger Dämpfungselemente bzw. Dämpfungselementanordnungen unmittelbar benachbart angeordneter Einheitszellen ausgebildet werden. Die Verbindung zwischen unmittelbar benachbart angeordneten Einheitszellen kann unlösbar oder (beschädigungs- bzw. zerstörungsfrei) lösbar sein.

Durch eine Anordnung gleicher und unterschiedlicher Einheitszellen lassen sich sonach Zonen gleicher oder unterschiedlicher geometrisch-konstruktiver Eigenschaften sowie gleicher oder unterschiedlicher struktureller Eigenschaften, d. h. insbesondere unterschiedlicher mechanischer Eigenschaften, Dämpfung, Härtegrade, Verformungsgrade, etc., ausbilden.

Das Sohlenelement und somit das Sohlen-Einlagen-Bauteil kann sonach - dies gilt grundsätzlich unabhängig von jeweiligen Einheitszellen - in mehrere Zonen unterschiedlicher geometrischekonstruktiver Eigenschaften sowie unterschiedlicher struktureller Eigenschaften aufgeteilt ausgebildet werden. Insbesondere kann ein oder mehrere Zonen für einen Vorfußbereich, ein oder mehrere Zonen für einen Mittelfußbereich und ein oder mehrere Zonen für einen Rückfußbereich (Fersenbereich) ausgebildet werden, wobei sich die Zonen in ihren geometrische-konstruktiven Eigenschaften sowie in ihren strukturellen Eigenschaften unterscheiden können.

Sämtliche vorstehenden Ausführungen im Zusammenhang mit jeweiligen Strukturelementanordnungen gelten analog für das Einlagenelement; entsprechend können verfahrensgemäß gegebenenfalls Einlagenelementdaten bereitgestellt werden, welche eine geometrisch-konstruktive Gestaltung des Einlagenelements beschreiben, welche zumindest abschnittsweise, insbesondere vollständig, durch eine mehrere miteinander verbundene strebenartige bzw. -förmige Strukturelemente umfassenden Strukturelementanordnung gebildet ist. Sämtliche weiteren Ausführungen im Zusammenhang mit dem Sohlenelement gelten analog für das Einlagenelement.

Ein weiterer Aspekt der hierin beschriebenen Erfindung betrifft ein Verfahren zur Fertigung eines Schuhs. Das Verfahren umfasst die folgenden Schritte:
- Fertigen eines kombinierten Sohlen-Einlagen-Bauteils für einen Schuh gemäß einem wie hierin beschriebenen Verfahren zur additiven Fertigung eines Sohlen-Einlagen-Bauteils, oder Bereitstellen eines gemäß einem wie hierin beschriebenen Verfahren zur additiven Fertigung eines Sohlen-Einlagen-Bauteil gefertigten Sohlen-Einlagen-Bauteils,
- Fertigen wenigstens eines Schuhaufbauelements, insbesondere eines einen Bestandteil eines Schuhschafts bildenden Schuhaufbauelements, oder Bereitstellen wenigstens eines Schuhaufbauelements, insbesondere eines einen Bestandteil eines Schuhschafts bildenden Schuhaufbauelements,
- Verbinden - es kommen grundsätzlich jedwede form-, kraft-, und/oder stoffschlüssige Verbindungsarten in Betracht - des gefertigten oder bereitgestellten kombinierten Sohlen-Einlagen-Bauteils mit dem wenigstens einem weiteren Schuhaufbauelement, insbesondere dem einen Bestandteil eines Schuhschafts bildenden Schuhaufbauelement, unter Ausbildung eines zu fertigenden Schuhs.

Verfahrensgemäß kann ein den Fuß eines Trägers bzw. einer Trägerin, insbesondere den Spann des Fußes eines Trägers bzw. einer Trägerin, zumindest abschnittsweises, gegebenenfalls vollständig, umschließendes weiteres Schuhaufbauelement gefertigt oder bereitgestellt werden. Mithin lassen sich mit dem Verfahren vollständig geschlossene Schuhe, teilweise geschlossene Schuhe oder offene Schuhe fertigen.

Verfahrensgemäß kann ein zumindest abschnittsweises, gegebenenfalls vollständig, aus einer textilen Materialstruktur, insbesondere einem Gestrick oder Gewebe, gebildetes weiteres Schuhaufbauelement gefertigt oder bereitgestellt werden. Das Sohlen-Einlagen-Bauteil kann sonach mit einem zumindest abschnittsweise, gegebenenfalls vollständig, aus einer textilen Materialstruktur, insbesondere einem Gestrick oder Gewebe, gebildeten weiteren Schuhaufbauelement verbunden werden.

Weitere Aspekte der hierin beschriebenen Erfindung betreffen ein gemäß dem Verfahren nach dem ersten Aspekt hergestelltes Sohlen-Einlagen-Bauteil sowie einen gemäß dem Verfahren nach dem zweiten Aspekt hergestellten Schuh. Es gelten die jeweils zugehörigen verfahrensbezogenen Ausführungen analog für das Sohlen-Einlagen-Bauteil bzw. den Schuh.

Die Erfindung ist anhand von Ausführungsbeispielen in den Zeichnungen näher erläutert. Dabei zeigt:
- Fig. 1: eine Prinzipdarstellung eines Sohlen-Einlagen-Bauteils gemäß einem Ausführungsbeispiel;
- Fig. 2: eine Prinzipdarstellung eines Schuhs gemäß einem Ausführungsbeispiel;
- Fig. 3: ein Flussdiagram eines Verfahrens gemäß einem Ausführungsbeispiel;
- Fig. 4, 5: je eine Prinzipdarstellung eines Sohlenelements eines Sohlen-Einlagen-Bauteils gemäß einem ersten Ausführungsbeispiel;
- Fig. 6: eine vergrößerte Ansicht der Einzelheit VI in Fig. 4;
- Fig. 7: eine vergrößerte Ansicht der Einzelheit VII in Fig. 5; und
- Fig. 8, 9: eine Strukturelementanordnung gemäß einem Ausführungsbeispiel.

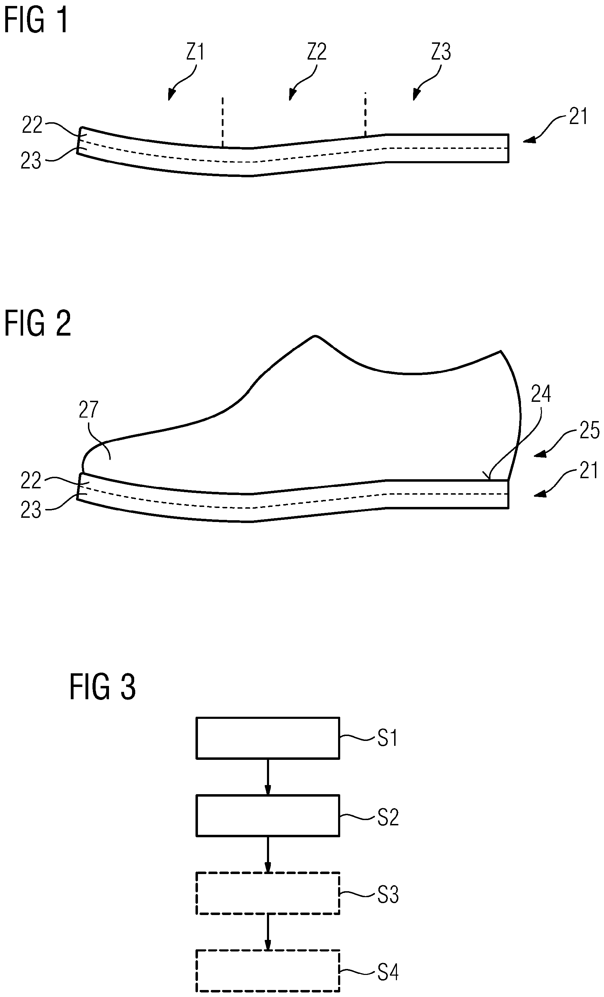

Fig. 1 zeigt eine Prinzipdarstellung eines kombinierten Sohlen-Einlagen-Bauteils 21 gemäß einem Ausführungsbeispiel in einer rein schematischen Darstellung. Das Sohlen-Einlagen-Bauteil 21 bildet einen Bestandteil eines Schuhs 25 (vgl. Fig. 2, welche ein Ausführungsbeispiel eines Schuhs 25 ebenfalls in einer rein schematischen Darstellung zeigt); das Sohlen-Einlagen-Bauteil 21 kann sonach als Schuhbestandteil bezeichnet bzw. erachtet werden.

Ersichtlich umfasst das Sohlen-Einlagen-Bauteil 21 ein Einlagenelement 22 und ein einstückig mit diesem ausgebildetes Sohlenelement 23. Das Sohlenelement 23 kann auch als Sohlenabschnitt des Sohlen-Einlagen-Bauteils 21, das Einlagenelement 22 auch als Einlagenabschnitt des Sohlen-Einlagen-Bauteils 21 bezeichnet bzw. erachtet werden. Das Sohlen-Einlagen-Bauteil 21 übernimmt sonach zwei unterschiedliche Funktionalitäten, nämlich einerseits die Funktionalität eines Sohlenelements und andererseits die Funktionalität eines Einlagenelements. Das Sohlen-Einlagen-Bauteil 21 kann sonach im Allgemeinen als integriertes Bauteil erachtet bzw. bezeichnet werden.

Bei dem Sohlenelement 23 des Sohlen-Einlagen-Bauteils 21 kann es sich, insbesondere bezogen auf einen Aufbau eines Schuhs 25, dessen Bestandteil das Sohlen-Einlagen-Bauteil 21 bildet, um ein Mittelsohlenelement oder um ein Außensohlenelement (Laufsohlenelement) handeln. In der Ausführung als Mittelsohlenelement weist das Sohlenelement 23 keine im getragenen Zustand eines mit dem Sohlen-Einlagen-Bauteil 21 ausgestatteten Schuhs 25 mit einem Untergrund in Kontakt stehende Außen- bzw. Lauffläche auf, in der Ausführung als Außensohlenelement weist das Sohlenelement 23 eine im getragenen Zustand eines mit dem Sohlen-Einlagen-Bauteil 21 ausgestatteten Schuhs 25 mit einem Untergrund in Kontakt stehende, gegebenenfalls profilierte, Außen- bzw. Lauffläche auf.

Bei dem Einlagenelement 22 des Sohlen-Einlagen-Bauteils 21 kann es sich, insbesondere bezogen auf einen Aufbau eines Schuhs 25, dessen Bestandteil das Sohlen-Einlagen-Bauteil 21 bildet, um ein Innensohlenelement handeln. Im getragenen Zustand eines mit dem Sohlen-Einlagen-Bauteil 21 ausgestatteten Schuhs 25, bildet das Einlagenelement sonach die Auflagefläche für einen Fuß eines Trägers bzw. einer Trägerin. Dies gilt auch für die denkbare Ausführungsform, in welcher das Einlagenelement 22 in einem bezogen auf den Aufbau eines mit dem Sohlen-Einlagen-Bauteil 21 ausgestatteten Schuhs 25 einem Fuß eines Trägers bzw. einer Trägerin zugewandten Auflageflächenbereich 4 zumindest abschnittsweise, gegebenenfalls vollständig, mit einer Funktionslage aus einem Funktionsmaterial, wie z. B. einem Ledermaterial, einem Textilmaterial, etc., versehen ist. Im Zusammenhang mit dem Einlagenelement 22 ist sonach zu erwähnen, dass dieses typischerweise einen geschlossenen Auflageflächenbereich 4 für einen Fuß eines Trägers bzw. einer Trägerin aufweist.

Fig. 3 zeigt ein Ausführungsbeispiel eines Verfahrens zur Fertigung des Sohlen-Einlagen-Bauteils 21. Das Sohlen-Einlagen-Bauteil 21 wird verfahrensgemäß additiv, d. h. unter Anwendung bzw. Einsatz wenigstens eines additiven Fertigungsprozesses, gefertigt. Es kommen dabei grundsätzlich sämtliche additiven Fertigungsprozesse in Betracht. Beispielsweise kommen additive Fertigungsprozesse in Betracht, welche eine additive Verarbeitung von pulverförmigem Baumaterial oder von nicht-pulverförmigem, d. h. insbesondere strangförmigem, Baumaterial ermöglichen. Weiter beispielsweise kommen additive Fertigungsprozesse in Betracht, welche eine strahlungsbasierte additive Fertigung, d. h. eine additive Fertigung, welche eine selektive Verfestigung von Baumaterial unter Einwirkung von energetischer Strahlung (Strahlungsenergie), oder eine nicht-strahlungsbasierte additive Fertigung, d. h. eine additive Fertigung, welche eine selektive Verfestigung von Baumaterial ohne Einwirkung von energetischer Strahlung (Strahlungsenergie), ermöglichen.

Da das Sohlen-Einlagen-Bauteil 21 typischerweise, jedoch keinesfalls zwingend, zumindest abschnittsweise, insbesondere vollständig, aus einem Kunststoffmaterial (der Begriff "Kunststoffmaterial" umfasst auch Gemische chemisch und/oder physikalisch unterschiedlicher Kunststoffe) gefertigt wird - das Einlagenelement 22 und das Sohlenelement 23 werden typischerweise aus dem gleichen Material gebildet -, kommen insbesondere solche additiven Fertigungsprozesse in Betracht, welche eine additive Verarbeitung von Kunststoffmaterialien ermöglichen. Lediglich beispielhaft sei in diesem Zusammenhang auf Stereolithographie-Prozesse, Binder-Jetting-Prozesse, Fused-Deposition-Modelling ("FDM")-Prozesse oder Continuous-Liquid-Interface-Production ("CLIP")-Prozesse verwiesen. Das Sohlen-Einlagen-Bauteil kann sonach z. B. vermittels eines Stereolithographie-Prozesses, Binder-Jetting-Prozesses, Fused-Deposition-Modelling ("FDM")-Prozesses oder einem Continuous-Liquid-Interface-Production ("CLIP")-Prozesses gefertigt werden. Zur Durchführung des im Weiteren näher erläuterten zweiten Schritts des Verfahrens können sonach beispielsweise additive Fertigungseinrichtungen, welche zur Durchführung von Stereolithographie-Prozessen, Binder-Jetting-Prozessen, FDM-Prozessen oder CLIP-Prozessen eingerichtet sind, eingesetzt werden.

Sollte das Sohlen-Einlagen-Bauteil 21 zumindest abschnittsweise, insbesondere vollständig, aus einem anderen Material als einem Kunststoffmaterial, d. h. z. B. einem Metall, gefertigt werden, kommen entsprechend solche additiven Fertigungsprozesse in Betracht, welche eine additive Verarbeitung von wenigstens einem anderen Material als einem Kunststoffmaterial ermöglichen, in Betracht. Lediglich beispielhaft sei auf selektive Lasersinterverfahren, selektive Laserschmelzverfahren, Metal-Binder-Jetting-Verfahren, etc. verwiesen.

Das Verfahren umfasst konkret die folgenden Schritte:
In einem ersten Schritt des Verfahrens (vgl. Schritt S1) erfolgt ein Bereitstellen von Einlagenelementdaten und Sohlenelementdaten. Das Bereitstellen kann z. B. über einen Datenträger oder eine Datenverbindung, wie ein lokales oder globales Datennetzwerk, d. h. z. B. ein Intranet oder das Internet, erfolgen. Die Bereitstellung der Einlagenelementdaten und Sohlenelementdaten erfolgt typischerweise an eine additive Fertigungseinrichtung bzw. eine dieser zugehörige, hardware- und/oder softwaremäßig implementierte Steuereinrichtung, welche zur datenmäßigen Verarbeitung der ihr bereitgestellten Einlagenelementdaten und Sohlenelementdaten zur Vorbereitung und/oder Durchführung eines additiven Fertigungsprozesses eingerichtet ist.

Die bereitgestellten Einlagenelementdaten beschreiben die geometrisch-konstruktive Gestaltung eines Einlagenelements 22, welches, wie erwähnt, einen Bestandteil des zu fertigenden Sohlen-Einlagen-Bauteils 21 bildet. In den Einlagenelementdaten sind typischerweise sämtliche geometrisch-konstruktiven Parameter des Einlagenelements 22 des zu fertigenden Sohlen-Einlagen-Bauteils 21 enthalten. Die Einlagenelementdaten können auch als Baudaten des Einlagenelements 22 bezeichnet bzw. erachtet respektive verwendet werden. Die Einlagenelementdaten können in einem beliebigen Dateiformat bereitgestellt werden; lediglich beispielhaft wird auf STL-, COLLADA-, OBJ-, FBX-, X3D-Formate verwiesen.

Die Einlagenelementdaten werden bzw. wurden Grundlage von die Morphologie wenigstens eines Fußes eines Trägers bzw. einer Trägerin zumindest abschnittsweise, gegebenenfalls vollständig, beschreibenden Fußdaten erzeugt. Die Einlagenelementdaten beschreiben sonach eine zumindest abschnittsweise, gegebenenfalls vollständig, an die Morphologie des wenigstens einen durch die Fußdaten beschriebenen Fußes angepasste geometrisch-konstruktive Gestaltung des Einlagenelements 22. Das Einlagenelement 22 kann verfahrensgemäß sonach auf Grundlage entsprechender Einlagenelementdaten zumindest abschnittsweise, gegebenenfalls vollständig, mit einer im Hinblick auf einen Fuß eines Trägers bzw. einer Trägerin individuell konfiguriert ausgebildeten geometrisch-konstruktiven Gestaltung ausgebildet werden. Die Berücksichtigung entsprechender Fußdaten - diese können z. B. auf Grundlage von optischen Aufnahmen (Scans) des Fußes, Abdrücken des Fußes, etc. - erstellt werden, bei der Erzeugung der Einlagenelementdaten stellt die Grundlage für eine (hoch)individualisierbare bzw. (hoch)individualisierte Fertigung der Sohlen-Einlagen-Bauteil dar.

Die bereitgestellten Sohlenelementdaten beschreiben die geometrisch-konstruktive Gestaltung eines Sohlenelements 23, welches, wie erwähnt, einen Bestandteil des zu fertigenden Sohlen-Einlagen-Bauteils 21 bildet. In den Sohlenelementdaten sind typischerweise sämtliche geometrisch-konstruktiven Parameter des Sohlenelements 23 des zu fertigenden Sohlen-Einlagen-Bauteils 21 enthalten. Die Sohlenelementdaten können auch als Baudaten des Sohlenelements 23 bezeichnet bzw. erachtet respektive verwendet werden. Die Sohlenelementdaten können ebenso in einem beliebigen Dateiformat bereitgestellt werden; lediglich beispielhaft wird auf STL-, COLLADA-, OBJ-, FBX-, X3D-Formate verwiesen.

Selbstverständlich ist es möglich, dass die Einlagenelementdaten und die Sohlenelementdaten als gemeinsamer Datensatz bereitgestellt werden, welcher sowohl die Einlagenelementdaten als auch die Sohlenelementdaten enthält. In einem entsprechenden gemeinsamen Datensatz sind sonach typischerweise sämtliche geometrisch-konstruktiven Parameter des Sohlen-Einlagen-Bauteils 21 enthalten.

In einem zweiten Schritt des Verfahrens (vgl. Schritt S2) erfolgt ein additives Fertigen eines Sohlen-Einlagen-Bauteils 21 auf Grundlage der Einlagenelementdaten und der Sohlenelementdaten bzw. eines entsprechenden gemeinsamen Datensatzes. In dem zweiten Schritt des Verfahrens erfolgt sonach die eigentliche Fertigung des Sohlen-Einlagen-Bauteils 21 durch Anwenden wenigstens eines additiven Fertigungsprozesses zur Fertigung des Sohlen-Einlagen-Bauteils 21. Dabei ist wesentlich, dass das Sohlen-Einlagen-Bauteil 21 in fertigungstechnisch effizienter Weise in einem einzigen additiven Fertigungsprozess gefertigt wird, was in der einstückigen bzw. integralen bzw. monolithischen Konfiguration des Sohlen-Einlagen-Bauteils 21 resultiert; das Einlagenelement 22 und das Sohlenelement 23 werden sonach in einem einzigen additiven Fertigungsprozess gemeinsam unter Ausbildung des Sohlen-Einlagen-Bauteils 21 gefertigt; hieraus resultiert die einstückige Ausbildung des Sohlen-Einlagen-Bauteils 21, welche sich dadurch auszeichnet, dass das Einlagenelement 22 mit dem Sohlenelement 23 und umgekehrt unlösbar verbunden ist. Der zur Fertigung des Sohlen-Einlagen-Bauteils 21 angewendete additive Fertigungsprozess beinhaltet sonach ein additives Ausbilden des Einlagenelements 22 und des Sohlenelements 23, welche im Rahmen des additiven Fertigungsprozesses als ein kombiniertes Bauteil gefertigt und somit (beschädigungs- bzw. zerstörungsfrei) unlösbar stoffschlüssig miteinander verbunden gefertigt werden. Das Einlagenelement 22 und das Sohlenelement 23 schließen sonach unmittelbar aneinander an bzw. gehen unmittelbar ineinander über. Das Einlagenelement 22 kann sonach für eine beispielhafte Anordnung bzw. Ausrichtung des Sohlen-Einlagen-Bauteils 21 in einem Bauraum einer additiven Fertigungseinrichtung unmittelbar auf dem Sohlenelement 23 aufgebaut werden oder umgekehrt. Je nach Anordnung bzw. Ausrichtung des Sohlen-Einlagen-Bauteils 21 in einem Bauraum einer additiven Fertigungseinrichtung sind jedoch auch andere Baustrategien, in welchen Abschnitte des Einlagenelements 22 und des Sohlenelements 23 (schichtbezogen) beispielsweise gleichzeitig aufgebaut werden, denkbar.

Es können Einlageelementdaten bereitgestellt werden, welche eine geometrisch-konstruktive Gestaltung des Einlagenelements 22 beschreiben, welche zumindest abschnittsweise, insbesondere vollständig, durch eine im Hinblick auf die durch die Fußdaten beschriebene Morphologie des wenigstens einen Fußes gewählte ergonomische Formgebung ausgebildet wird. Das Einlagenelement 22 kann sonach z. B. zumindest abschnittsweise, gegebenenfalls vollständig, mit einem im Hinblick auf die durch die Fußdaten beschriebene Fußmorphologie individuell konfigurierten Fußbett ausgebildet werden.

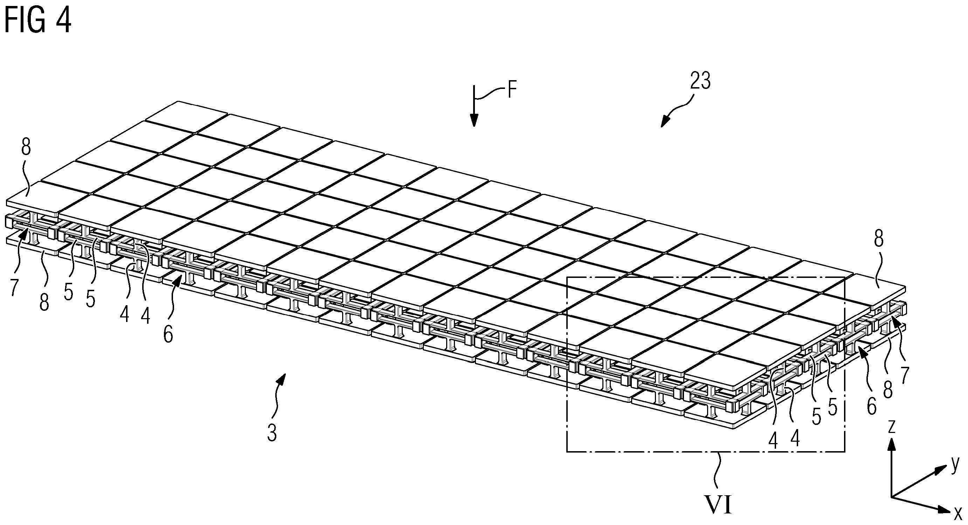

Es können Sohlenelementdaten bereitgestellt werden, welche eine geometrisch-konstruktive Gestaltung des Sohlenelements 23 beschreiben, welche zumindest abschnittsweise, insbesondere vollständig, durch eine mehrere miteinander verbundene strebenartige bzw. - förmige Strukturelemente 5 umfassende Strukturelementanordnung 6 gebildet ist. Das Sohlenelement 23 kann sonach in Form einer durch die Sohlenelementdaten beschriebenen Strukturelementanordnung 6 gefertigt werden, welche zumindest abschnittsweise, insbesondere vollständig, durch mehrere miteinander verbundene strebenartige bzw. -förmige Strukturelemente 5 umfasst. Wie weiter unten im Zusammenhang mit den Ausführungsbeispielen gemäß Fig. 4 ff näher erläutert wird, können durch unterschiedliche Konfigurationen einer entsprechenden Strukturelementanordnung 6 gezielt unterschiedliche strukturelle, d. h. insbesondere mechanische, Eigenschaften des Sohlenelements 23 und somit des Sohlen-Einlagen-Bauteils 21 realisiert werden.

Das Einlagenelement 22 kann mit einem randseitig zumindest abschnittsweise, gegebenenfalls vollständig, umlaufenden, insbesondere gegenüber einer Referenzebene - dies kann z. B. durch einen Auflageflächenbereich 4 des Einlagenelements 22 definiert werden - erhöhten, Einlagensohlenelementbereich gefertigt werden, welcher den Fuß eines Trägers bzw. einer Trägerin im getragenen Zustand des Sohlen-Einlagen-Bauteils 21 (fuß)umfangsseitig zumindest abschnittsweise umschließt.

Das Sohlenelement 23 und/oder das Einlagenelement 22 kann bzw. können zumindest abschnittsweise, gegebenenfalls vollständig, mit mehreren Zonen Z1 - Zn unterschiedlicher geometrisch-konstruktiver und/oder unterschiedlicher struktureller Eigenschaften, d. h. insbesondere mechanischer Eigenschaften, gefertigt werden. Beispielsweise kann wie in Fig. 1 rein exemplarisch angedeutet wenigstens eine Zone Z1 für einen Vorfußbereich, wenigstens eine Zone Z2 für einen Mittelfußbereich sowie wenigstens eine Zone Z3 für einen Rückfußbereich (Fersenbereich) ausgebildet werden, welche sich in ihren strukturellen Eigenschaften, d. h. insbesondere in ihren mechanischen Eigenschaften, unterscheiden können. Entsprechende Zonen Z1 - Zn können insbesondere trägerspezifisch individualisiert ausgebildet werden.

Zurückkommend auf Fig. 3 ist zu ergänzen, dass im Zusammenhang mit der Herstellung eines Schuhs 25 in einem optionalen dritten Schritt des Verfahrens (vgl. Schritt S3) ein Fertigen oder Bereitstellen wenigstens eines Schuhaufbauelements 27, insbesondere eines einen Bestandteil eines Schuhschafts bildenden Schuhaufbauelements, und in einem optionalen vierten Schritt des Verfahrens (vgl. Schritt S4) ein Verbinden des Sohlen-Einlagen-Bauteils 21 mit dem wenigstens einen Schuhaufbauelement 27, insbesondere dem einen Bestandteil eines Schuhschafts bildenden Schuhaufbauelement, unter Ausbildung des zu fertigenden Schuhs 25 erfolgen kann.

Verfahrensgemäß kann in Schritt S3 ein den Fuß eines Trägers bzw. einer Trägerin, insbesondere den Spann des Fußes eines Trägers bzw. einer Trägerin, zumindest abschnittsweises, gegebenenfalls vollständig, umschließendes weiteres Schuhaufbauelement 27 gefertigt oder bereitgestellt werden. Mithin lassen sich mit dem Verfahren vollständig geschlossene Schuhe, teilweise geschlossene Schuhe oder offene Schuhe fertigen.

Verfahrensgemäß kann in Schritt S3 ein zumindest abschnittsweises, gegebenenfalls vollständig, aus einer textilen Materialstruktur, insbesondere einem Gestrick oder Gewebe, gebildetes weiteres Schuhaufbauelement 27 gefertigt oder bereitgestellt werden. Das Sohlen-Einlagen-Bauteil kann sonach mit einem zumindest abschnittsweise, gegebenenfalls vollständig, aus einer textilen Materialstruktur, insbesondere einem Gestrick oder Gewebe, gebildeten weiteren Schuhaufbauelement verbunden werden.

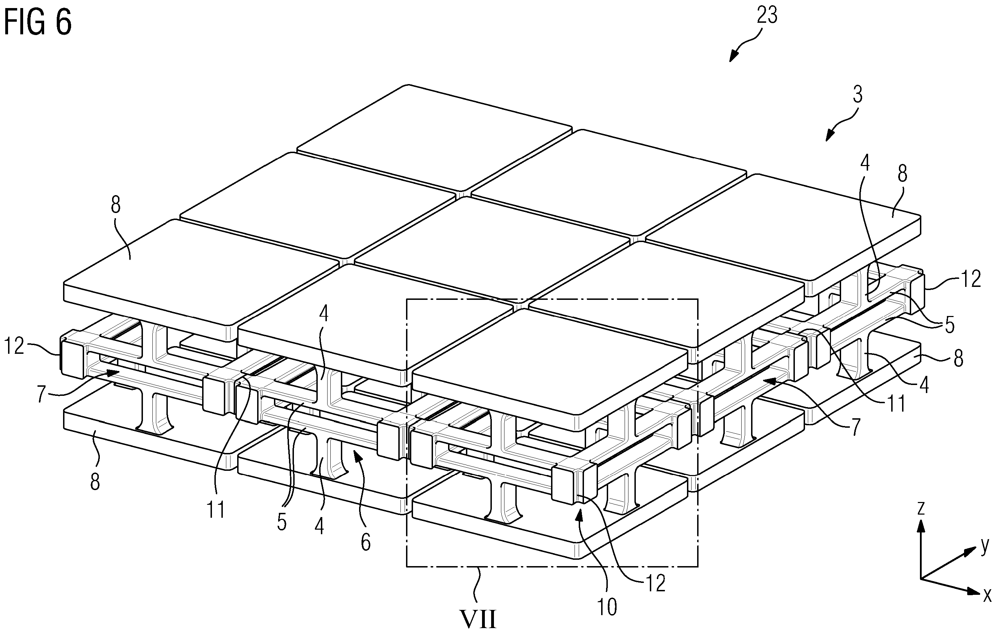

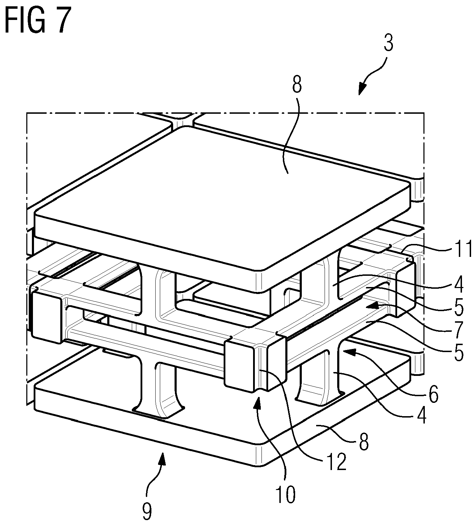

Fig. 4 zeigt eine Prinzipdarstellung eines Sohlenelements 23 für ein Sohlen-Einlagen-Bauteil 21 gemäß einem Ausführungsbeispiel in einer perspektivischen Ansicht. Eine Einzelheit VI der in Fig. 4 gezeigten Sohle ist in Fig. 6 in einer vergrößerten Ansicht gezeigt; eine Einzelheit VII der in Fig. 6 gezeigten Einzelheit VII ist in Fig. 7 in einer vergrößerten Ansicht gezeigt.

Anhand der Fig. 4 - 7 ist ersichtlich, dass das Sohlenelement 23 durch eine Strukturelementanordnung 3 gebildet ist bzw. eine Strukturelementanordnung 3 umfasst. Die Strukturelementanordnung 3 ist durch mehrere miteinander verbundene strebenartige bzw. - förmige Strukturelemente 4, 5 gebildet bzw. umfasst mehrere miteinander verbundene strebenartige bzw. -förmige Strukturelemente 4, 5.

Die strebenartige bzw. -förmige geometrisch-konstruktive Grundform der Strukturelemente 4, 5 ergibt sich aus der länglichen Grundform der Strukturelemente 4, 5. Die Querschnittsgeometrie der Strukturelemente 4, 5 ist in den in den Fig. gezeigten Ausführungsbeispielen vieleckig, d. h. insbesondere viereckig; es sind jedoch prinzipiell auch andere, d. h. z. B. runde bzw. rundliche, Querschnittsgeometrien denkbar.

Die strukturellen Eigenschaften des Sohlenelements 23, d. h. insbesondere die die Dämpfungseigenschaften bzw. den Härte- bzw. Verformungsgrad definierenden mechanischen Eigenschaften des Sohlenelements 23, resultieren im Wesentlichen aus dem geometrisch-konstruktiven Aufbau der Strukturelementanordnung 3, d. h. insbesondere der Anordnung und/oder Ausrichtung der Strukturelemente 4, 5. Entsprechend lassen sich die strukturellen Eigenschaften des Sohlenelements 23, d. h. insbesondere die die Dämpfungseigenschaften bzw. den Härte- bzw. Verformungsgrad definierenden mechanischen Eigenschaften des Sohlenelements 23, durch die gezielte Auswahl bzw. Variation der Anordnung und/oder Ausrichtung der Strukturelemente 4, 5 gezielt einstellen.

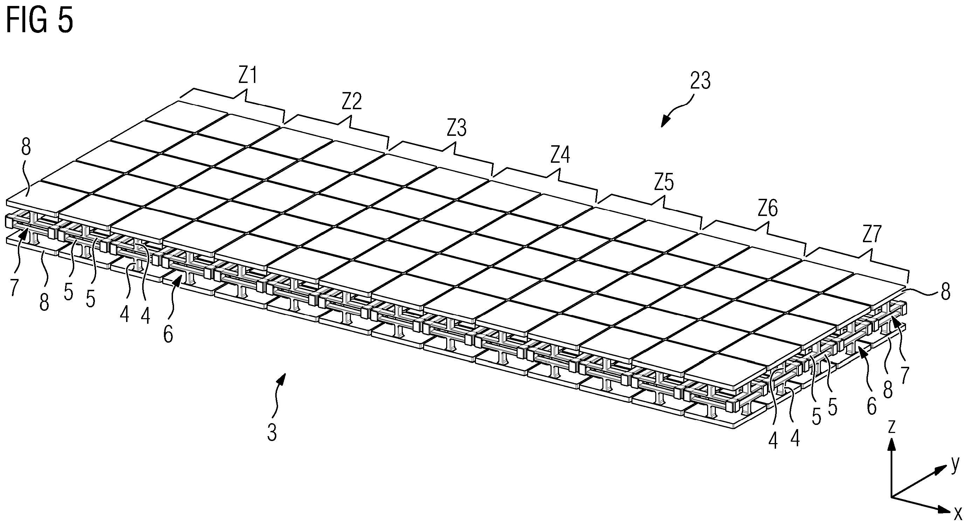

Insbesondere ist durch eine gezielte bereichs- bzw. zonenweise Auswahl bzw. eine gezielte bereichs- bzw. zonenweise Variation der Anordnung und/oder Ausrichtung der Strukturelemente 4, 5 eine beliebige Anzahl an Bereichen bzw. Zonen (vgl. Fig. 5, in welcher beispielhaft eine gleichmäßige Anordnung von sieben unterschiedlichen Zonen Z1 - Z7 - denkbar wäre selbstverständlich auch eine ungleichmäßige Anordnung von mehr oder weniger als sieben Zonen - gezeigt ist), d. h. z. B. einzelne oder mehrere Bereiche bzw. Zonen Z1, Z2 für einen Vorfußbereich, einzelne oder mehrere Bereiche bzw. Zonen Z3, Z4, Z5 für einen Mittelfußbereich sowie einzelne oder mehrere Bereiche bzw. Zonen für einen Rückfußbereich Z6, Z7 (Fersenbereich), mit unterschiedlichen strukturellen Eigenschaften, d. h. insbesondere unterschiedlichen mechanischen Eigenschaften, realisierbar. Das Sohlenelement 23 kann sonach für einen Träger bzw. eine Trägerin, d. h. insbesondere auch für einen bestimmten Fuß eines Trägers bzw. einer Trägerin, individuell anpassbaren bzw. angepassten strukturellen Eigenschaften, d. h. insbesondere mechanischen Eigenschaften, aufweisen.

Die Strukturelementanordnung 3 umfasst ersichtlich erste Strukturelemente 4, welche in einer ersten Raumrichtung bzw. Raumorientierung (vertikale Raumrichtung bzw. Raumorientierung, z-Richtung) angeordnet oder ausgebildet sind, und zweite Strukturelemente 5, welche in einer von der ersten Raumrichtung bzw. Raumorientierung verschiedenen zweiten Raumrichtung bzw. Raumorientierung (horizontale Raumrichtung bzw. Raumorientierung, x-Richtung, y-Richtung) angeordnet oder ausgebildet sind. Die erste Raumrichtung bzw. Raumorientierung ist eine durch eine vertikale Raumachse definierte vertikale Raumrichtung bzw. Raumorientierung, die zweite Raumrichtung bzw. Raumorientierung ist eine durch eine horizontale Raumachse definierte horizontale Raumrichtung bzw. Raumorientierung. Die ersten Strukturelemente 4 sind sonach rechtwinklig zu den zweiten Strukturelementen 5 (und umgekehrt) angeordnet bzw. ausgerichtet.

Die ersten und zweiten Strukturelemente 4, 5 sind, insbesondere aufgrund ihrer unterschiedlichen Anordnung und Ausrichtung, unterschiedlich funktionalisiert, d. h. unterscheiden sich in ihrer Funktion. Die ersten Strukturelemente 4 sind als zur Übertragung von bei bestimmungsgemäßer Verwendung auf das Sohlenelement 23 wirkenden Kräften (vgl. Pfeil F in Fig. 4) angeordnet oder ausgebildet und werden sonach auch als Kraftübertragungselemente bezeichnet. Die zweiten Strukturelemente 5 sind als zur Dämpfung von bei bestimmungsgemäßer Verwendung auf die Sohle wirkenden Kräften angeordnet oder ausgebildet und werden sonach auch als Dämpfungselemente bezeichnet werden.

Durch die in den Fig. gezeigte Anordnung und Ausrichtung erster und zweiter Strukturelemente 4, 5 sind kombinierte Kraftübertragungs-Dämpfungs-Substrukturen 6 ausgebildet. Eine jeweilige Substruktur 6 hat aufgrund der als Kraftübertragungselemente dienenden ersten Strukturelemente 4 sowohl Kraftübertragungseigenschaften als auch aufgrund der als Dämpfungselemente dienenden zweiten Strukturelemente 5 Dämpfungseigenschaften inne. Eine jeweilige Substruktur 6 zeichnet sich damit sowohl durch eine Kraftübertragungsfunktion und als auch durch eine Dämpfungsfunktion aus.

Die Substruktur 6 ist in den in den Fig. 4 ff gezeigten Ausführungsbeispielen durch zwei erste Strukturelemente 4, d. h. zwei Kraftübertragungselemente, und zwei zweite Strukturelemente 5, d. h. zwei Dämpfungselemente, gebildet. Die beiden Kraftübertragungselemente (erste Strukturelemente 4) sind in vertikaler Ausrichtung parallel zu der Richtung einer bei bestimmungsgemäßer Verwendung des Sohlen-Einlagen-Bauteils 21 auf das Sohlenelement 23 wirkenden Kraft (Kraftwirkrichtung) angeordnet. Die beiden Dämpfungselemente (zweite Strukturelemente 5) sind in horizontaler Ausrichtung quer zu der Richtung der bei bestimmungsgemäßer Verwendung des Sohlen-Einlagen-Bauteils 21 auf das Sohlenelement 23 wirkenden Kraft (Kraftwirkrichtung) angeordnet.

Ersichtlich sind die beiden Dämpfungselemente (zweite Strukturelemente 5) einer Substruktur 6 unter Ausbildung einer Dämpfungselementanordnung 7 parallel zu einander angeordnet oder ausgebildet. Die Dämpfungseigenschaften einer jeweiligen Dämpfungselementanordnung 7 ergeben sich insbesondere aus der Dicke der diese bildenden Dämpfungselemente sowie dem Abstand zwischen den diese bildenden Dämpfungselementen. Mithin sind z. B. über die Dicke der Dämpfungselemente und deren Abstand zueinander Parameter zur gezielten Auswahl und Einstellung bestimmter Dämpfungseigenschaften einer Dämpfungselementanordnung 7 gegeben. Durch entsprechende Auswahl und Einstellung der Parameter kann für eine bestimmte auf die Dämpfungselementanordnung 7 wirkende Kraft z. B. eine bestimmte Verformung, d. h. insbesondere eine maximale Verformung, z. B. eine maximale Verformung von 1 mm, der Dämpfungselementanordnung 7 definiert werden.

Die Einleitung von Kräften in eine jeweilige Dämpfungselementanordnung 7 erfolgt über jeweilige Kraftübertragungselemente (erste Strukturelemente 4) einer jeweiligen Substruktur 6. Ein erstes bzw. oberes Kraftübertragungselement ist hierzu derart relativ zu einem diesen benachbarten ersten bzw. oberen Dämpfungselement angeordnet, dass über dieses Kräfte in die Dämpfungselementanordnung 7 übertragbar sind. Ein zweites bzw. unteres Kraftübertragungselement ist derart relativ zu einem diesen benachbarten zweiten bzw. unteren Dämpfungselement angeordnet, dass über dieses Kräfte aus der Dämpfungselementanordnung 7 auf dieses übertragbar sind.

Aufgrund der vertikalen Ausrichtung der Kraftübertragungselemente und der horizontalen Ausrichtung der Dämpfungselemente ergibt sich für eine Substruktur 6 ein Doppel-T-Aufbau, bei welchem die durch die Dämpfungselemente gebildeten horizontal verlaufenden Abschnitte der "Ts" aufeinander liegend angeordnet und die durch die Kraftübertragungselemente gebildeten vertikal verlaufenden Abschnitte der "Ts" in vertikaler Richtung miteinander fluchtend angeordnet sind.

Ersichtlich umfasst die Strukturelementanordnung 3 mehrere entsprechende Substrukturen 6, d. h. eine Vielzahl an Substrukturen 6. Die Substrukturen 6 sind in einer (gemeinsamen) Ebene (x-y-Ebene) des Sohlenelements 23 angeordnet und ausgerichtet. Mehrere Substrukturen 6 können eine Substrukturanordnung 10 bilden.

Das Sohlenelement 23 umfasst neben den Strukturelementen 4, 5 mehrere zum Einleiten einer bei bestimmungsgemäßer Verwendung auf das Sohlenelement 23 wirkenden Kraft in jeweilige Substrukturen 6 ausgebildete flächige, insbesondere plättchenartige bzw. -förmige, Krafteinleitungselemente 8. Die Krafteinleitungselemente 8 weisen in den in den Fig. gezeigten Ausführungsbeispielen eine vieleckige, d. h. eine viereckige, Grundform auf. Ersichtlich sind jeweilige Krafteinleitungselemente 8 auf einer Ober- und/oder einer Unterseite der Strukturelementanordnung 3 angeordnet oder ausgebildet; in den in den Fig. gezeigten Ausführungsbeispielen sind erste bzw. obere Krafteinleitungselemente 8 vorhanden, welche auf einer Oberseite der Strukturelementanordnung 3 angeordnet oder ausgebildet sind, und zweite bzw. untere Krafteinleitungselemente 8 vorhanden, welche auf einer Unterseite der Strukturelementanordnung 3 angeordnet oder ausgebildet sind.

Ersichtlich sind jeweilige auf einer Ober- bzw. einer Unterseite der Strukturelementanordnung 3 angeordnete oder ausgebildete Krafteinleitungselemente 8 nicht unmittelbar mit- bzw. untereinander verbunden. Zwischen auf einer Ober- bzw. einer Unterseite der Strukturelementanordnung 3 unmittelbar benachbart angeordneten oder ausgebildeten Krafteinleitungselementen 8 ist ein Spaltraum gebildet. Die Einleitung einer Kraft in ein erstes Krafteinleitungselement 8 bedingt damit nicht unmittelbar die Einleitung einer Kraft in ein zu dem ersten Krafteinleitungselement 8 unmittelbar benachbart angeordnetes oder ausgebildetes zweites Krafteinleitungselement 8.

Die Krafteinleitungselemente 8 sind zum Einleiten einer auf das Sohlenelement 23 wirkenden Kraft in die Kraftübertragungselemente (ersten Strukturelemente 4) einer jeweiligen Substruktur 6 ausgebildet und entsprechend mit wenigstens einem Kraftübertragungselement verbunden; an jeweiligen Krafteinleitungselementen 8 ist sonach wenigstens ein Kraftübertragungselement angebunden. Das jeweilige Kraftübertragungselement ragt typischerweise in vertikaler Richtung von einer der Strukturelementanordnung 3 zugewandten Ober- oder Unterseite eines jeweiligen Krafteinleitungselements 8 in Richtung der Dämpfungselemente bzw. einer jeweiligen Dämpfungselementanordnung 7 ab.

Durch entsprechende Krafteinleitungselemente 8 und entsprechende Substrukturen 6 ist eine in Fig. 7 gezeigte Einheitszelle 9 des Sohlenelements 23 gebildet. Eine Einheitszelle 9 kann als geometrisch-konstruktiver Grundbaustein des Sohlenelements 23 bezeichnet bzw. erachtet werden. Anhand von Fig. 7 ist ersichtlich, dass eine Einheitszelle 9 durch eine Mehrzahl an in einer (gemeinsamen) Ebene des Sohlenelement 23 und um einen bestimmten Winkel relativ zueinander verdreht bzw. versetzt zueinander angeordnete und ausgerichtete Substrukturen 6 sowie eine Mehrzahl an auf diesen Substrukturen 6 ober- und unterseitig angeordneten oder ausgebildeten Krafteinleitungselementen 8 gebildet ist. Die Substrukturen 6 sind im Bereich ihrer Enden über in den in den Fig. 4 ff gezeigten Ausführungsbeispielen beispielhaft blockartige Verbindungsbereiche 12 miteinander verbunden.

Die in den in den Fig. 4 ff gezeigten Ausführungsbeispielen gezeigte Einheitszelle 9 umfasst vier in einer Ebene um 90° verdreht bzw. versetzt zueinander angeordnete und ausgerichtete Substrukturen 6, welche eine Substrukturanordnung 10 bilden. Auf dieser Substrukturanordnung 10 ist oberseitig das erste bzw. obere Krafteinleitungselement 8 und unterseitig das zweite bzw. untere Krafteinleitungselement 8 angeordnet bzw. ausgebildet. Die Einheitszelle 9 umfasst sonach vier Substrukturen 6 und zwei Krafteinleitungselemente 8. Die Substrukturen 6 bilden die Seitenflächen der Einheitszelle 9, das erste bzw. obere Krafteinleitungselement 8 bildet die Oberseite, das zweite bzw. untere Krafteinleitungselement 8 bildet die Unterseite der Einheitszelle 9.

Ersichtlich weist die Einheitszelle 9 eine quaderartige bzw. -förmige bzw. eine würfelartige bzw. - förmige Grundform auf. Die Kanten- bzw. Seitenlänge der Einheitszelle 9 kann z. B. in einem Bereich zwischen 5 und 15 mm, insbesondere zwischen bei ca. 10 mm, liegen. Die Höhe der Einheitszelle 9 kann ebenso z. B. in einem Bereich zwischen 5 und 15 mm, insbesondere zwischen bei ca. 10 mm, liegen.

Die strukturellen Eigenschaften, d. h. insbesondere die mechanischen Eigenschaften, einer jeweiligen Einheitszelle 9 sind durch die strukturellen Eigenschaften, d. h. insbesondere die mechanischen Eigenschaften, der Bestandteile der Einheitszelle 9 sowie deren Anordnung und Ausrichtung relativ zu einander definierbar bzw. definiert.

Anhand der Fig. 4 ff ist ersichtlich, dass das Sohlenelement 23 eine Vielzahl an im Hinblick auf deren geometrisch-konstruktive Eigenschaften, d. h. insbesondere deren Abmessungen, gleiche Einheitszellen 9 umfassen kann. Unmittelbar benachbart angeordnete Einheitszellen 9 sind über einen Verbindungsbereich 11 miteinander verbunden. Ein entsprechender Verbindungsbereich 11 ist in den in den Fig. 4 ff gezeigten Ausführungsbeispielen im Bereich jeweiliger Dämpfungselemente bzw. Dämpfungselementanordnungen 7 unmittelbar benachbart angeordneter Einheitszellen 9 ausgebildet.

In gleichen Zonen des Sohlenelements 23 angeordnete Einheitszellen 9 weisen typischerweise gleiche strukturelle Eigenschaften, d. h. insbesondere gleiche mechanische Eigenschaften, auf. In unterschiedlichen Zonen des Sohlenelements 23 angeordnete Einheitszellen 9 können unterschiedliche strukturelle Eigenschaften d. h. insbesondere unterschiedliche mechanische Eigenschaften, aufweisen.

Durch eine Anordnung von im Hinblick auf ihre strukturellen Eigenschaften, d. h. insbesondere mechanische Eigenschaften, gleicher oder unterschiedlicher Einheitszellen 9 lassen sich sonach Zonen gleicher oder unterschiedlicher struktureller Eigenschaften, d. h. insbesondere unterschiedlicher mechanischer Eigenschaften, Dämpfung, Härtegrade, Verformungsgrade, etc., ausbilden. Das Sohlenelement 23 kann derart, wie bereits im Zusammenhang mit dem in Fig. 5 gezeigten Ausführungsbeispiel erläutert, in mehrere Zonen unterschiedlicher struktureller Eigenschaften aufgeteilt sein. Die einer bestimmten Zone zugehörigen Einheitszellen 9 weisen, wie erwähnt, typischerweise gleiche geometrisch-konstruktiven Eigenschaften und gleiche strukturelle Eigenschaften auf.

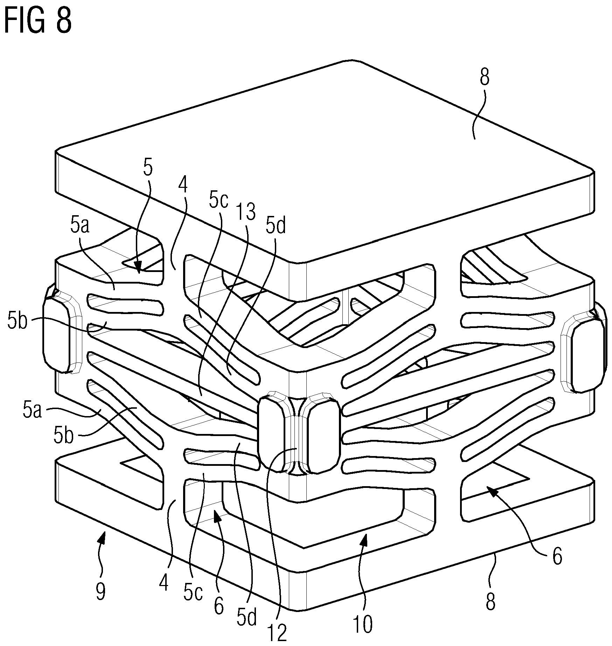

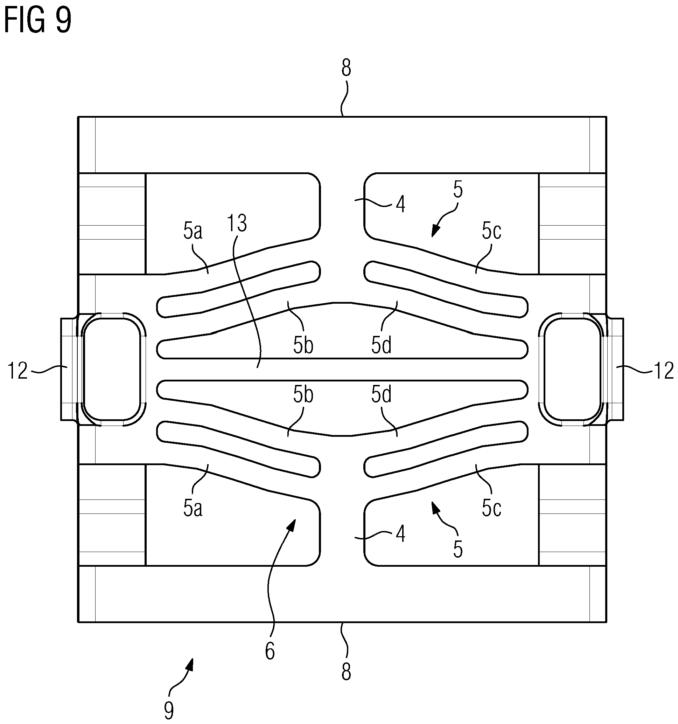

Die Fig. 8, 9 zeigen eine Strukturelementanordnung 3 bzw. eine Einheitszelle 9 gemäß einem weiteren Ausführungsbeispiel. Die Strukturelementanordnung 3 bzw. bzw. die Einheitszelle 9 ist in Fig. 8 in einer perspektivischen Ansicht und in Fig. 9 in einer Frontansicht gezeigt.

Bei der in dem in den Fig. 8, 9 gezeigten Ausführungsbeispiel handelt es sich um eine alternative Ausführung zu dem in den Fig. 7 gezeigten Ausführungsbeispiel einer Einheitszelle 9; mithin könnte auch die Einheitszelle 9 gemäß dem in den Fig. 8, 9 gezeigten Ausführungsbeispiel anstelle der Einheitszelle 9 gemäß dem in Fig. 7 gezeigten Ausführungsbeispiel zur Ausbildung eines Sohlenelements 23 verwendet werden. Auch ein Sohlenelement 23, welches sowohl Einheitszellen 9 gemäß dem in Fig. 7 gezeigten Ausführungsbeispiel als auch Einheitszellen 9 gemäß dem in den Fig. 8, 9 gezeigten Ausführungsbeispiel umfasst, ist denkbar.

Anhand des in den Fig. 8, 9 gezeigten Ausführungsbeispiels ist ersichtlich, dass die zweiten Strukturelemente 5 segmentiert ausgeführt sein können - Analoges gilt, wenngleich nicht gezeigt, für die ersten Strukturelemente 4. Die zweiten Strukturelemente 5 können sonach durch mehrere parallel verlaufend angeordnete Strukturelementsegmente 5a - 5d gebildet sein. Durch eine segmentierte Ausführung der zweiten Strukturelemente 5 können die strukturellen Eigenschaften der Strukturelementanordnung 3 und somit des Sohlenelements 23, d. h. insbesondere die mechanischen Eigenschaften des Sohlenelement 23, weiter gezielt beeinflusst werden.

Ersichtlich können parallel angeordnete bzw. ausgebildete Strukturelementsegmente 5a - 5d paarweise angeordnet oder ausgebildet sein. Die zweiten Strukturelemente 5 können sonach mehrere Paare parallel angeordneter oder ausgebildeter Strukturelementsegmente 5a - 5d umfassen. In dem in den Fig. 8, 9 gezeigten Ausführungsbeispiel bilden zwei parallel angeordnete bzw. ausgebildete Strukturelementsegmente 5a - 5d ein Strukturelementsegmentpaar. Jedes zweite Strukturelement 5 ist sonach durch zwei Strukturelementsegmentpaare gebildet bzw. umfasst zwei Strukturelementsegmentpaare.

Anhand des in den Fig. 8, 9 gezeigten Ausführungsbeispiels ist weiter ersichtlich, dass - grundsätzlich unabhängig von deren segmentierter Ausführung - die zweiten Strukturelemente 5 - Analoges gilt wiederum für die ersten Strukturelemente 4 - schräg bezüglich einer horizontalen oder vertikalen Referenzachse oder -ebene verlaufend angeordnet sein können. Eine entsprechend schräg bezüglich einer horizontalen oder vertikalen Referenzachse oder -ebene angeordneter Verlauf jeweiliger Strukturelemente 5 bzw. für den in den Fig. 8, 9 gezeigten Fall der segmentierten Ausführung jeweiliger Strukturelemente 5 stellt ebenso eine Maßnahme zur gezielten Beeinflussung der strukturellen Eigenschaften der Strukturelementanordnung 3 bzw. des Sohlenelement 23, d. h. insbesondere der mechanischen Eigenschaften der Strukturelementanordnung 3 bzw. der Sohlenelement 23, dar, da sich durch den schrägen Verlauf insbesondere andere Dämpfungseigenschaften der Strukturelementanordnung 3 ergeben können. Entsprechend können insbesondere die als Dämpfungselemente bzw. die zweiten Strukturelemente 5 schräg bezüglich einer horizontalen oder vertikalen Referenzachse oder -ebene verlaufend angeordnet sein. Dabei ist es, wie in den Fig. 8, 9 gezeigt, dass bezüglich einer Oberseite des Sohlenelements 23 obere zweite Strukturelemente 5 unter einem anderen Winkel schräg bezüglich einer entsprechenden Referenzachse bzw. -ebene verlaufend angeordnet oder ausgebildet sind, als untere zweite Strukturelemente 5.

In den Fig. 8 ,9 ist eine Kombination der segmentierten Ausführung der zweiten Strukturelemente 5 und des schräg bezüglich einer horizontalen oder vertikalen Referenzachse oder -ebene angeordneten Verlaufs der zweiten Strukturelemente 5 gezeigt. Mithin sind die zweiten Strukturelemente 5 durch mehrere parallel verlaufend angeordnete Strukturelementsegmente 5a - 5d gebildet, und die Strukturelementsegmente 5a - 5d sind schräg bezüglich einer horizontalen oder vertikalen Referenzachse oder -ebene verlaufend angeordnet.

Für die jeweiligen Strukturelementsegmentpaare eines zweiten Strukturelements 5 gilt, dass ein erstes Strukturelementsegmentpaar in einem ersten Winkel bezüglich einer horizontalen oder vertikalen Referenzachse oder -ebene verlaufend angeordnet ist und ein zweites Strukturelementsegmentpaar zweier Strukturelementsegmente 5a - 5d in einem zweiten Winkel bezüglich der horizontalen oder vertikalen Referenzachse oder -ebene verlaufend angeordnet ist. Derart ergibt sich die in den Fig. 8, 9 gezeigte keilartige bzw. -förmige Geometrie der zweiten Strukturelemente 5, wobei die Keilflanken durch jeweilige Strukturelementsegmentpaare gebildet sind.

Ersichtlich ist eine spiegelsymmetrische Anordnung jeweiliger ein jeweiliges zweites Strukturelement 5 bildender Strukturelementsegmentpaare gegeben. Der Winkel zwischen jeweiligen Strukturelementsegmentpaaren ist stumpf, d. h. typischerweise oberhalb 90°, insbesondere oberhalb 130°, gegebenenfalls oberhalb 150°.

Anhand des in den Fig. 8, 9 gezeigten Ausführungsbeispiels sind ferner optionale dritte Strukturelemente 13 ersichtlich. Die Strukturelementanordnung 3 kann sonach ferner dritte Strukturelemente 13 umfassen, welche sich funktionell von den ersten und zweiten Strukturelementen 4, 5 unterscheiden. Die dritten Strukturelemente 13 sind als zur Übertragung von auf das Sohlenelement 23 bzw. die Strukturelementanordnung 3, insbesondere in Längsrichtung des Sohlenelements 23 bzw. der Strukturelementanordnung 3 wirkenden, Zugkräften ausgebildete Zugkraftübertragungselemente respektive als zur Übertragung von innerhalb des Sohlenelements 23 bzw. der Strukturelementanordnung 3 entstehenden, insbesondere in Längsrichtung des Sohlenelements 23 bzw. der Strukturelementanordnung 3 wirkenden, Zugkräften ausgebildete Zugkraftübertragungselemente angeordnet oder ausgebildet. Die dritten Strukturelemente 13 können sonach auch als Zugkraftübertragungselemente bezeichnet bzw. erachtet werden.

Ersichtlich sind jeweilige dritte Strukturelemente 13 jeweils zwischen zwei zweiten Strukturelementen 5 angeordnet bzw. ausgebildet und in einer durch eine horizontale Raumachse definierte horizontale Raumrichtung bzw. Raumorientierung angeordnet.

Einzelne, mehrere oder sämtliche im Zusammenhang mit einem bestimmten Ausführungsbeispiel beschriebenen Merkmale können mit einzelnen, mehreren oder sämtlichen Merkmale wenigstens eines anderen Ausführungsbeispiels beliebig kombiniert werden.

## Patentansprüche

1. Verfahren zur Fertigung eines kombinierten Sohlen-Einlagen-Bauteils (21) für einen orthopädischen Schuh (25), welches ein Sohlenelement (23), nämlich ein Mittelsohlenelement oder ein Außensohlenelement, und ein einstückig mit diesem ausgebildetes Einlagenelement (22), nämlich ein Innensohlenelement, umfasst, umfassend die folgenden Schritte:
- Bereitstellen von die geometrisch-konstruktive Gestaltung eines Einlagenelements (22) eines zu fertigenden Sohlen-Einlagen-Bauteils (21) beschreibenden Einlagenelementdaten, wobei die Einlagenelementdaten auf Grundlage von die Morphologie wenigstens eines Fußes eines Trägers zumindest abschnittsweise, gegebenenfalls vollständig, beschreibenden Fußdaten erzeugt wurden,
wobei Einlageelementdaten bereitgestellt werden, welche eine geometrisch-konstruktive Gestaltung des Einlagenelements (22) beschreiben, welche zumindest abschnittsweise, insbesondere vollständig, durch eine im Hinblick auf die durch die Fußdaten beschriebene Morphologie des wenigstens einen Fußes gewählte ergonomische Formgebung gebildet ist;
- Bereitstellen von die geometrisch-konstruktive Gestaltung eines Sohlenelements (23) eines zu fertigenden Sohlen-Einlagen-Bauteils (21) beschreibenden Sohlenelementdaten, wobei Sohlenelementdaten bereitgestellt werden, welche eine geometrisch-konstruktive Gestaltung des Sohlenelements (23) beschreiben, welche zumindest abschnittsweise, insbesondere vollständig, durch eine mehrere miteinander verbundene strebenartige Strukturelemente (4, 5) umfassende Strukturelementanordnung (3) gebildet ist,
- additives Fertigen eines kombinierten Sohlen-Einlagen-Bauteils (21) auf Grundlage der Einlagenelementdaten und der Sohlenelementdaten, wobei
das Einlagenelement (22) zumindest abschnittsweise, gegebenenfalls vollständig, mit einem im Hinblick auf die durch die Fußdaten beschriebene Fußmorphologie individuell konfigurierten Fußbett ausgebildet wird; und
das Sohlenelement (23) durch die mehrere miteinander verbundene strebenartige bzw. - förmige Strukturelemente umfassende Strukturelementanordnung gebildet wird,
wobei die die Dämpfungseigenschaften und die den Härte- bzw. Verformungsgrad definierenden mechanischen Eigenschaften des Sohlenelements (23) durch die gezielte Auswahl bzw. Variation der Anzahl und/oder Anordnung und/oder Ausrichtung jeweiliger Strukturelemente gezielt eingestellt werden,
wobei durch eine gezielte bereichs- bzw. zonenweise Auswahl bzw. eine gezielte bereichs- bzw. zonenweise Variation der Anordnung und/oder Ausrichtung jeweiliger Strukturelemente einzelne oder mehrere Bereiche bzw. Zonen für einen Vorfußbereich, einzelne oder mehrere Bereiche bzw. Zonen für einen Mittelfußbereich sowie einzelne oder mehrere Bereiche bzw. Zonen für einen Rückfußbereich (Fersenbereich), mit unterschiedlichen strukturellen Eigenschaften, d. h. insbesondere unterschiedlichen mechanischen Eigenschaften, realisiert werden,
sodass das Sohlen-Einlagen-Bauteil (21) mit für einen bestimmten Fuß eines Trägers individuell angepassten strukturellen Eigenschaften, d. h. insbesondere mechanischen Eigenschaften, realisiert wird.

2. Verfahren nach Anspruch 1, **dadurch gekennzeichnet, dass** das kombinierte Sohlen-Einlagen-Bauteil (21) in einem einzigen additiven Fertigungsprozess gefertigt wird.

3. Verfahren nach einem der vorhergehenden Ansprüche, **dadurch gekennzeichnet, dass** das Einlagenelement (22) mit einem randseitig zumindest abschnittsweise, gegebenenfalls vollständig, umlaufenden, insbesondere gegenüber einer Referenzebene, Einlagensohlenelementbereich gefertigt wird, welcher den Fuß eines Trägers im getragenen Zustand des kombinierten Sohlen-Einlagen-Bauteils (21) abschnittsweise umschließt.

4. Verfahren nach einem der vorhergehenden Ansprüche, **dadurch gekennzeichnet, dass** das kombinierte Sohlen-Einlagen-Bauteil (21) zumindest abschnittsweise, gegebenenfalls vollständig, aus einem Kunststoffmaterial gefertigt wird.

5. Verfahren nach einem der vorhergehenden Ansprüche, **dadurch gekennzeichnet, dass** das kombinierte Sohlen-Einlagen-Bauteil (21) vermittels eines Stereolithographie-Prozesses, Binder-Jetting-Prozesses, Fused-Deposition-Modelling ("FDM")-Prozesses oder eines Continuous-Liquid-Interface-Production ("CLIP")-Prozesses gefertigt wird.

6. Kombiniertes Sohlen-Einlagen-Bauteil (21), **dadurch gekennzeichnet, dass** es gemäß einem Verfahren nach einem der vorhergehenden Ansprüche gefertigt ist.

7. Verfahren zur Fertigung eines orthopädischen Schuhs (25), umfassend die folgenden Schritte:
- Fertigen eines kombinierten Sohlen-Einlagen-Bauteils (21) für einen Schuh (25) gemäß einem Verfahren nach einem der vorhergehenden Ansprüche 1 bis 5, oder
- Bereitstellen eines gemäß einem Verfahren nach einem der vorhergehenden Ansprüche 1 bis 5 gefertigten kombinierten Sohlen-Einlagen-Bauteils (21),
- Fertigen wenigstens eines Schuhaufbauelements (27), insbesondere eines einen Bestandteil eines Schuhschafts bildenden Schuhaufbauelements (27), oder
- Bereitstellen wenigstens eines Schuhaufbauelements (27), insbesondere eines einen Bestandteil eines Schuhschafts bildenden Schuhaufbauelements (27),
- Verbinden des gefertigten oder bereitgestellten kombinierten Sohlen-Einlagen-Bauteils (21) mit dem wenigstens einen gefertigten oder bereitgestellten weiteren Schuhaufbauelement (27), insbesondere dem einen Bestandteil eines Schuhschafts bildenden Schuhaufbauelement (27), unter Ausbildung des zu fertigenden Schuhs (25).

8. Verfahren nach Anspruch 7, **dadurch gekennzeichnet, dass** ein den Fuß eines Trägers, insbesondere den Spann des Fußes eines Trägers, zumindest abschnittsweises, gegebenenfalls vollständig, umschließendes weiteres Schuhaufbauelement (27) gefertigt oder bereitgestellt wird.

9. Verfahren nach Anspruch 7 oder 8, **dadurch gekennzeichnet, dass** ein zumindest abschnittsweises, gegebenenfalls vollständig, aus einer textilen Materialstruktur, insbesondere einem Gestrick oder Gewebe, gebildetes weiteres Schuhaufbauelement (27) gefertigt oder bereitgestellt wird.

10. Orthopädischer Schuh (25), **dadurch gekennzeichnet, dass** er gemäß einem Verfahren nach einem der Ansprüche 7 bis 9 gefertigt ist.

## Claims

1. Method for manufacturing a combined sole-insole component (21) for an orthopedic shoe (25), which comprises a sole member (23), namely a midsole member or an outsole member, and a integrally formed with this insole member (22), namely an insole member, comprising the following steps:
- providing the geometric-constructive design of an insole element (22) of a sole-insole component (21) to be manufactured descriptive insole element data, wherein the insole element data were generated on the basis of the morphology of at least one foot of a support at least partially, if necessary completely, descriptive foot data,
wherein insert element data are provided which describe a geometric-constructive design of the insert element (22) which is formed at least in part, in particular completely, by an ergonomic shape selected with regard to the morphology of the at least one foot described by the foot data;
- providing the geometric-constructive design of a sole member (23) of a sole insert component to be manufactured (21) descriptive sole member data, wherein sole member data are provided describing a geometric-constructive design of the sole member (23), which is formed at least partially, in particular completely, by a plurality of interconnected strut-like structural members (4, 5) comprising structural member arrangement (3),
- additive manufacturing of a combined sole-insole component (21) based on the insole element data and the sole element data, wherein
the insole element (22) is formed at least partially, if necessary completely, with a footbed individually configured with regard to the foot morphology described by the foot data; and the sole element (23) is formed by the multiple interconnected strut-like or -shaped structural elements comprising structural element arrangement,
wherein the damping properties and the mechanical properties of the sole element (23) defining the degree of hardness or deformation are specifically adjusted by the targeted selection or variation of the number and / or arrangement and / or orientation of respective structural elements,
wherein by a targeted area- or zone-by-area selection or a targeted area- or zone-by-area variation of the arrangement and/or orientation of respective structural elements, individual or more areas or zones for a forefoot area, individual or more areas or zones for a midfoot area as well as individual or more areas or zones for a backfoot area (heel area), with different structural properties, i.e. in particular different mechanical properties, are realized,
so that the sole-insert component (21) is realized with structural properties individually adapted for a particular foot of a support, i.e. in particular mechanical properties.

2. The method of claim 1, **characterized in that** the combined sole-insert component (21) is manufactured in a single additive manufacturing process.

3. Method according to one of the preceding claims, **characterized in that** the insole element (22) is manufactured with an edge-side at least partially, optionally completely, circumferential, in particular with respect to a reference plane, insole element region, which encloses the foot of a support in the worn state of the combined sole-insole component (21) in sections.

4. Method according to any one of the preceding claims, **characterized in that** the combined sole-insert component (21) is manufactured at least partially, if necessary completely, from a plastic material.

5. Method according to any one of the preceding claims, **characterized in that** the combined sole-insert component (21) is manufactured by means of a stereolithography process, binder-jetting process, fused deposition modeling ("FDM") process or a continuous liquid interface production ("CLIP") process.

6. Combined sole-insert component (21), **characterized in that** it is manufactured according to a method according to one of the preceding claims.

7. Method of manufacturing an orthopedic shoe (25), comprising the following steps:
- fabricating a combined sole-insert component (21) for a shoe (25) according to a method according to any one of the preceding claims 1 to 5, or
- providing a combined sole-insert component (21) manufactured according to a method according to any one of the preceding claims 1 to 5,
- manufacture at least one shoe construction element (27), in particular a shoe construction element (27) forming a component of a shoe shaft, or
- providing at least one shoe-building element (27), in particular a shoe-building element forming a component of a shoe shaft (27),
- Connecting the manufactured or provided combined sole-insert component (21) to the at least one manufactured or provided further shoe construction element (27), in particular the shoe construction element (27), forming a component of a shoe shaft, forming the shoe to be manufactured (25).

8. The method of claim 7, **characterized in that** one of the foot of a carrier, in particular the instep of the foot of a carrier, at least in part, optionally complete, enclosing further shoe construction element (27) is manufactured or provided.

9. The method of claim 7 or 8, **characterized in that** an at least partially, optionally completely, formed from a textile material structure, in particular a knitted or woven fabric, further shoe construction element (27) is manufactured or provided.

10. Orthopedic shoe (25), **characterized in that** it is manufactured according to a method according to one of claims 7 to 9.

## Revendications

1. Procédé de fabrication d'un élément combiné semelle-insert (21) pour une chaussure orthopédique (25) comprenant un élément de semelle (23), à savoir un élément de semelle intermédiaire ou un élément de semelle extérieure, et un élément de semelle formé en une seule pièce avec celui-ci (22), à savoir un élément de semelle intérieure, comprenant les étapes suivantes:
- Fournir des données descriptives sur la conception géométrique et constructive d'un élément de semelle (22) d'un composant semelle-insert (21) à fabriquer, les données de l'élément de semelle ayant été générées sur la base de la morphologie d'au moins un pied d'un porteur, au moins par sections, le cas échéant dans leur intégralité, des données descriptives sur le pied,
en fournissant des données relatives à l'élément d'insertion décrivant une conception géométrique et constructive de l'élément d'insertion (22) qui est formée au moins par sections, en particulier de manière complète, par une forme ergonomique choisie au regard de la morphologie d'au moins un pied décrite par les données relatives au pied;
- Fournir des données descriptives sur la conception géométrique-constructive d'un élément de semelle (23) d'un composant semelle-insert à fabriquer (21) en fournissant des données sur les éléments de semelle décrivant une conception géométrique-constructive de l'élément de semelle (23) formée au moins par sections, en particulier de manière complète, par un ensemble de plusieurs éléments structurels contigus (4, 5) (3),
- fabrication additive d'un composant semelle-insert combiné (21) sur la base des données relatives aux éléments de semelle et des données relatives aux éléments de semelle, où:
l'élément de semelle (22) est formé au moins par sections, le cas échéant dans son intégralité, avec un repose-pieds configuré individuellement en fonction de la morphologie du pied décrite dans les données relatives au pied; et
l'élément de semelle (23) est formé par l'assemblage de plusieurs éléments structurels ressemblant à des aspirations ou formant des aspirations, reliés entre eux,
où les propriétés mécaniques de l'élément de semelle (23) définissant les propriétés d'amortissement et le degré de dureté ou de déformation sont déterminées de manière ciblée par la sélection ou la variation ciblée du nombre et/ou de la disposition et/ou de l'orientation des éléments structurels correspondants,
une sélection ciblée de zones ou de zones ou une variation ciblée de la disposition et/ou de l'orientation des éléments structurels respectifs permet de réaliser une ou plusieurs zones ou zones pour une zone de l'avant-pied, une ou plusieurs zones ou zones pour une zone du milieu du pied et une ou plusieurs zones ou zones pour une zone du pied arrière (zone du talon), avec des caractéristiques structurelles différentes, c'est-à-dire en particulier des propriétés mécaniques différentes,
de sorte que l'élément semelle-insert (21) soit réalisé avec des caractéristiques structurelles adaptées individuellement à un pied donné d'un support, c'est-à-dire en particulier des propriétés mécaniques.

2. Procédé selon la revendication 1, **caractérisé en ce que** l'élément combiné semelle-insert (21) est fabriqué en un seul procédé de fabrication additive.

3. Procédé selon l'une quelconque des revendications précédentes, **caractérisé en ce que** l'élément d'insertion (22) est fabriqué avec une zone d'élément d'insertion périphérique au moins par section, le cas échéant complète, notamment vis-à-vis d'un plan de référence, qui entoure par section le pied d'une poutre à l'état porté de l'élément d'insertion de semelle combiné (21).

4. Procédé selon l'une quelconque des revendications précédentes, **caractérisé en ce que** l'élément combiné semelle-insert (21) est fabriqué, au moins par sections, le cas échéant complètement, à partir d'une matière plastique.

5. Procédé selon l'une quelconque des revendications précédentes, **caractérisé en ce que** l'élément combiné semelle-insert (21) est fabriqué au moyen d'un procédé de stéréolithographie, d'un procédé de jet de liant, d'un procédé de modélisation par dépôt en fusion (FDM) ou d'un procédé de production d'interface liquide continue (CLIP).

6. Pièce combinée semelle-insert (21), **caractérisée en ce qu'elle** est fabriquée selon un procédé selon l'une quelconque des revendications précédentes.

7. Procédé de fabrication d'une chaussure orthopédique (25), comprenant les étapes suivantes:
- Fabrication d'un élément combiné semelle-insert (21) pour une chaussure (25) selon un procédé selon l'une quelconque des revendications 1 à 5 précédentes, ou
- Mise à disposition d'un élément combiné semelle-insert fabriqué selon un procédé selon l'une quelconque des revendications 1 à 5 précédentes (21),
- confectionner au moins un élément de structure de chaussure (27), en particulier un élément de structure de chaussure faisant partie d'une tige de chaussure (27), ou
- Fournir au moins un élément de structure de chaussure (27), en particulier un élément de structure de chaussure faisant partie d'une tige de chaussure (27),
- Assemblage de l'élément combiné semelle-insert (21) fabriqué ou fourni avec au moins un autre élément de structure de chaussure (27) fabriqué ou fourni, en particulier l'élément de structure de chaussure (27) faisant partie d'une tige de chaussure, avec formation de la chaussure à fabriquer (25).

8. Procédé selon la revendication 7, **caractérisé en ce qu'un** autre élément de construction de chaussure (27) entourant le pied d'une poutre, en particulier le tendeur du pied d'une poutre, est fabriqué ou fourni, au moins par sections, le cas échéant complètement.

9. Procédé selon la revendication 7 ou 8, **caractérisé en ce qu'un** autre élément de structure de chaussure (27) formé au moins par sections, le cas échéant entièrement, d'une structure textile, en particulier d'un tricot ou d'un tissu, est fabriqué ou fourni.

10. Chaussure orthopédique (25), **caractérisée en ce qu'elle** est fabriquée selon un procédé selon l'une quelconque des revendications 7 à 9.
